# EUROPEAN PATENT APPLICATION

(11) **EP 4 797 602 A1**
(43) Date of publication of application: **26.08.2026**
(21) Application number: 24884167.8
(22) Date of filing: 23.08.2024
(51) Int. Cl.: H04L 5/00, G06N 3/08

(54) **COMMUNICATION METHOD AND RELATED DEVICE**

(30) Priority: 03.11.2023 CN 202311461212
(71) Applicant: HUAWEI TECHNOLOGIES CO., LTD., Shenzhen 518129 (CN)
(72) Inventor: XU, Chen, Shenzhen, Guangdong 518129 (CN); ZHANG, Gongzheng, Shenzhen, Guangdong 518129 (CN); WANG, Jian, Shenzhen, Guangdong 518129 (CN); LI, Rong, Shenzhen, Guangdong 518129 (CN)
(74) Representative: Körber, Martin Hans
(86) International application number: PCT/CN2024/114227
(87) International publication number: WO 2025/092160

(57) **Abstract**

A communication method and a related device are provided, so that computational power of a communication node can be applied to artificial intelligence (artificial intelligence, Al) processing of a neural network, and flexibility of neural network deployment can be improved. In the method, second data sent by a first communication apparatus is obtained based on first data. Subsequently, a receiver (for example, a second communication apparatus) of the second data may process the second data to obtain third data. An index of the first data in a first dataset is used to determine fourth data in a second dataset, and the fourth data is label data corresponding to the first data. In addition, one or both of the second data and the third data are obtained based on a neural network. In other words, a neural network for AI processing may include a neural network deployed in the first communication apparatus and/or a neural network deployed in the second communication apparatus.

## Description

This application claims priority to Chinese Patent Application No. 202311461212.5, filed with the China National Intellectual Property Administration on November 3, 2023 and entitled "COMMUNICATION METHOD AND RELATED DEVICE", which is incorporated herein by reference in its entirety.

### TECHNICAL FIELD

This application relates to the communication field, and in particular, to a communication method and a related device.

### BACKGROUND

Wireless communication may be transmission communication performed between two or more communication nodes without propagation through a conductor or a cable. The communication nodes usually include a network device and a terminal device.

Currently, in a wireless communication system, a communication node usually has a signal receiving and sending capability and a computing capability. For example, in a network device with a computing capability, its computing capability mainly provides computational power support for a signal receiving and sending capability (for example, performing sending processing and receiving processing on a signal), to implement communication between the network device and other communication nodes.

However, in a communication network, in addition to providing computational power support for the foregoing communication task based on the computing capability of the communication node, the communication node may further have a surplus computing capability. Therefore, how to use these computing capabilities is an urgent technical problem to be resolved.

### SUMMARY

This application provides a communication method and a related device, so that computational power of a communication node can be applied to artificial intelligence (artificial intelligence, AI) processing of a neural network, and flexibility of neural network deployment can be improved.

A first aspect of this application provides a communication method. The method is performed by a first communication apparatus. The first communication apparatus may be a communication device (for example, a terminal device or a network device), or the first communication apparatus may be a part of components (for example, a processor, a chip, or a chip system) in the communication device, or the first communication apparatus may be a logical module or software that can implement all or a part of functions of the communication device. In the first aspect and possible implementations thereof, an example in which the communication method is performed by the first communication apparatus is used for description. For example, the first communication apparatus may be a terminal device or a network device. In the method, the first communication apparatus processes first data to obtain second data. The first data is data in a first dataset. The first communication apparatus sends the second data. The second data is used to determine third data, an index of the first data in the first dataset is used to determine fourth data in a second dataset, the second dataset includes label data corresponding to data in the first dataset, the fourth data is label data corresponding to the first data, and the second data is obtained by processing the first data based on a first neural network, and/or the third data is obtained by processing the second data based on a second neural network. The index satisfies at least one of the following items: the index is determined based on a resource carrying the second data; and the index is determined based on a quantity of processing times of the data in the first dataset.

Based on the foregoing technical solution, the second data sent by the first communication apparatus is obtained based on the first data. Subsequently, a receiver (for example, a second communication apparatus) of the second data may process the second data to obtain the third data. The index of the first data in the first dataset is used to determine the fourth data in the second dataset, and the fourth data is the label data corresponding to the first data. In other words, after receiving the second data, the receiver of the second data can determine the label data in the second dataset, and process the third data based on the label data. In addition, one or both of the second data and the third data are obtained based on a neural network. In other words, a neural network used for AI processing may include a neural network deployed in the first communication apparatus and/or a neural network deployed in the second communication apparatus. Therefore, when a communication apparatus in a communication system serves as an AI participating node, computational power of the communication apparatus can be applied to AI processing of a neural network, and flexibility of neural network deployment can be improved.

In addition, the index of the first data in the first dataset is used to determine, in the second dataset, the label data (namely, the fourth data) corresponding to the first data, and the index satisfies at least one of the foregoing items. In other words, after receiving the second data, the second communication apparatus can determine the label data in the second dataset based on a resource carrying data or a quantity of processing times of data in a dataset. In this manner, air interface overheads can be reduced, to improve communication efficiency.

It should be understood that, in the foregoing technical solution, the second data is obtained by processing the first data based on the first neural network, and/or the third data is obtained by processing the second data based on the second neural network. The first dataset and the second dataset may be included in one dataset. The one dataset may include N pieces of input data and M pieces of label data. Both N and M are positive integers. In addition, the first dataset may include the N pieces of input data, and the second dataset may include the M pieces of label data. In other words, the first dataset may be referred to as an input dataset, a neural network input dataset, or the like, and the second dataset may be referred to as a label dataset, a neural network label dataset, or the like. In addition, an AI neural network may be processed based on a same dataset, to implement iteration, updating, and the like of the AI neural network.

Optionally, the first dataset may include N pieces of input data in one dataset. Therefore, the first dataset may alternatively be replaced with another description, for example, N pieces of input data or N pieces of input data in a dataset. Correspondingly, the second dataset may include M pieces of label data in the one dataset. Therefore, the second dataset may alternatively be replaced with another description, for example, M pieces of label data or M pieces of label data in a dataset.

Optionally, when each of the N pieces of input data corresponds to different pieces of label data in the M pieces of label data, a value of N is equal to a value of M. When at least two of the N pieces of input data correspond to one piece of same label data in the M pieces of label data, a value of N may be greater than or equal to a value of M. When one of the N pieces of input data corresponds to at least two of the M pieces of label data, a value of N may be less than or equal to a value of M.

In this application, terms such as AI, neural network, AI neural network, machine learning, AI processing, and AI neural network processing may be replaced with each other.

In this application, related data (for example, the first data, the second data, the third data, and the fourth data) may be replaced with information, a signal, or the like.

Optionally, when the second data is obtained by processing the first data in the first dataset based on the first neural network, because the second data is to-be-sent data obtained by the first communication apparatus by processing the first data, the first neural network may be referred to as a neural network deployed at a transmit end, an encoding neural network, an AI encoding neural network, or the like. Similarly, when the third data is obtained by processing the second data based on the second neural network, because the third data is data obtained by the second communication apparatus by processing the received second data based on the second neural network, the second neural network may be referred to as a neural network deployed at a receive end, a decoding neural network, an AI decoding neural network, or the like.

In a possible implementation of the first aspect, that the index is determined based on the resource carrying the second data includes: a value of the index is determined by at least one of a time domain resource index of the resource, a frequency domain resource index of the resource, and a resource block size of the resource.

Based on the foregoing technical solution, when the index of the first data in the first dataset is determined based on the resource carrying the second data, the index may be specifically determined based on at least one of the foregoing items, to improve flexibility of implementing the solution.

In a possible implementation of the first aspect, when the index is determined based on the quantity of processing times of the data in the first dataset, the method further includes: The first communication apparatus sends first information. The first information indicates the index of the first data in the first dataset.

Based on the foregoing technical solution, when the index of the first data in the first dataset is determined based on the quantity of processing times of the data in the first dataset, because the second communication apparatus may be unaware of the quantity of processing times of the data in the first dataset, the second communication apparatus may determine the index based on the quantity of processing times of the data in the second dataset. Correspondingly, the first communication apparatus may further send the first information, so that the second communication apparatus can determine the index of the first data in the first dataset based on the first information, and subsequently determine the fourth data in the second dataset based on the index.

It should be understood that, the first communication apparatus may perform a plurality of times of processing based on the data in the first dataset to obtain and send processing results (for example, one of the processing results is the second data obtained based on the first data). Correspondingly, in the plurality of processing results, the first communication apparatus may send a corresponding index for a part or all of the processing results (for example, send the first information for the processing result that is the second data). Then, sending the corresponding index based on the part or all of the processing results can implement alignment of understandings of the index by a data receiver and a data sender, to avoid a data processing error caused by misalignment of the understandings of the index by the data receiver and the data sender, thereby improving system robustness.

In this application, "alignment" may mean that when a message/data/information is exchanged between different communication apparatuses, two communication apparatuses have a consistent understanding of a meaning, a configuration manner, an index in a dataset, and the like of the exchanged message/data/information.

Optionally, the first communication apparatus may send, for a part of the processing results, an index corresponding to the part of the processing results, and does not need to send, for all processing results, indexes corresponding to all the processing results, thereby reducing overheads.

In a possible implementation of the first aspect, the first information is one of a plurality of pieces of information transmitted based on a first periodicity, and the method further includes: The first communication apparatus receives or sends configuration information. The configuration information is used to configure the first periodicity.

Based on the foregoing technical solution, the first information may be one piece of periodic information transmitted based on the first periodicity. Before this, the first communication apparatus may receive or send the configuration information used to configure the first periodicity, so that the first communication apparatus not only can serve as a configuring party of the first periodicity, but also can serve as a configured party of the first periodicity. This can align understandings of the first periodicity by the data receiver and the data sender, and can also improve flexibility of implementing the solution.

In a possible implementation of the first aspect, the method further includes: The first communication apparatus receives indication information indicating the first dataset; and/or the first communication apparatus sends indication information indicating the second dataset.

Based on the foregoing technical solution, the first communication apparatus may serve as a configured party of the first dataset, and/or the first communication apparatus may serve as a configuring party of the second dataset, so that the data receiver and the data sender can obtain a dataset before exchanging data.

Optionally, the first dataset may be preconfigured in the first communication apparatus, and/or the second dataset may be preconfigured in the second communication apparatus. In this manner, overheads can be reduced.

In a possible implementation of the first aspect, the method further includes: The first communication apparatus receives one or both of gradient information and a result of a loss function that are determined based on the third data and the fourth data.

Based on the foregoing technical solution, the receiver (for example, the second communication apparatus) of the second data can perform processing based on the second data to obtain the third data, and the receiver can further determine and send the corresponding gradient information and/or the corresponding result of the loss function based on the third data and the fourth data. In this way, after receiving the gradient information and/or the result of the loss function, the first communication apparatus can update or iterate the first neural network based on the gradient information and/or the result of the loss function.

In a possible implementation of the first aspect, the method further includes: The first communication apparatus receives or sends indication information indicating that the index satisfies the at least one item.

Based on the foregoing technical solution, the first communication apparatus may further receive or send the indication information indicating that the index satisfies the at least one item, so that the data receiver and the data sender can implement alignment of understandings of indexes of data in a dataset based on the indication information, to avoid a data processing error caused by misalignment of the understandings of the index by the data receiver and the data sender, thereby improving system robustness.

A second aspect of this application provides a communication method. The method is performed by a second communication apparatus. The second communication apparatus may be a communication device (for example, a terminal device or a network device), or the second communication apparatus may be a part of components (for example, a processor, a chip, or a chip system) in the communication device, or the second communication apparatus may be a logical module or software that can implement all or a part of functions of the communication device. In the second aspect and possible implementations thereof, an example in which the communication method is performed by a second communication apparatus is used for description. The second communication apparatus may be a terminal device or a network device. In the method, the second communication apparatus receives second data. The second data is obtained by processing based on first data, the first data is data in a first dataset, an index of the first data in the first dataset is used to determine fourth data in a second dataset, the second dataset includes label data corresponding to data in the first dataset, and the fourth data is label data corresponding to the first data. The second communication apparatus determines third data based on the second data. The second data is obtained by processing the first data based on a first neural network, and/or the third data is obtained by processing the second data based on a second neural network. The index satisfies at least one of the following items: the index is determined based on a resource carrying the second data, and the index is determined based on a quantity of processing times of the data in the second dataset.

Based on the foregoing technical solution, the second data received by the second communication apparatus is obtained based on the first data. Subsequently, the second communication apparatus may process the second data to obtain the third data. The index of the first data in the first dataset is used to determine the fourth data in the second dataset, and the fourth data is the label data corresponding to the first data. In other words, after receiving the second data, the second communication apparatus can determine the label data in the second dataset, and process the third data based on the label data. In addition, one or both of the second data and the third data are obtained based on a neural network. In other words, a neural network used for AI processing may include a neural network deployed in the first communication apparatus and/or a neural network deployed in the second communication apparatus. Therefore, when a communication apparatus in a communication system serves as an AI participating node, computational power of the communication apparatus can be applied to AI processing of a neural network, and flexibility of neural network deployment can be improved.

In addition, the index of the first data in the first dataset is used to determine, in the second dataset, the label data (namely, the fourth data) corresponding to the first data, and the index satisfies at least one of the foregoing items. In other words, after receiving the second data, the second communication apparatus can determine the label data in the second dataset based on a resource carrying data or a quantity of processing times of data in a dataset. In this manner, air interface overheads can be reduced, to improve communication efficiency.

In a possible implementation of the second aspect, that the index is determined based on the resource carrying the second data includes: a value of the index is determined by at least one of a time domain resource index of the resource, a frequency domain resource index of the resource, and a resource block size of the resource.

Based on the foregoing technical solution, when the index of the first data in the first dataset is determined based on the resource carrying the second data, the index may be specifically determined based on at least one of the foregoing items, to improve flexibility of implementing the solution.

In a possible implementation of the second aspect, when the index is determined based on the quantity of processing times of the data in the second dataset, the method further includes: The second communication apparatus sends first information. The first information indicates the index of the first data in the first dataset.

Based on the foregoing technical solution, when the index of the first data in the first dataset is determined based on the quantity of processing times of the data in the first dataset, because the second communication apparatus may be unaware of the quantity of processing times of the data in the first dataset, the second communication apparatus may determine the index based on the quantity of processing times of the data in the second dataset. Correspondingly, the second communication apparatus may further receive the first information, so that the second communication apparatus can determine the index of the first data in the first dataset based on the first information, and subsequently determine the fourth data in the second dataset based on the index.

It should be understood that, the first communication apparatus may perform a plurality of times of processing based on the data in the first dataset to obtain and send processing results (for example, one of the processing results is the second data obtained based on the first data). Correspondingly, in the plurality of processing results, the first communication apparatus may send a corresponding index for a part or all of the processing results (for example, send the first information for the processing result that is the second data). Then, sending the corresponding index based on the part or all of the processing results can implement alignment of understandings of the index by a data receiver and a data sender, to avoid a data processing error caused by misalignment of the understandings of the index by the data receiver and the data sender, thereby improving system robustness.

Optionally, the first communication apparatus may send, for a part of the processing results, an index corresponding to the part of the processing results, and does not need to send, for all processing results, indexes corresponding to all the processing results, thereby reducing overheads.

In a possible implementation of the second aspect, the first information is one of a plurality of pieces of information transmitted based on a first periodicity, and the method further includes: The second communication apparatus receives or sends configuration information. The configuration information is used to configure the first periodicity.

Based on the foregoing technical solution, the first information may be one piece of periodic information transmitted based on the first periodicity. Before this, the second communication apparatus may receive or send the configuration information used to configure the first periodicity, so that the second communication apparatus not only can serve as a configuring party of the first periodicity, but also can serve as a configured party of the first periodicity. This can align understandings of the first periodicity by the data receiver and the data sender, and can also improve flexibility of implementing the solution.

In a possible implementation of the second aspect, the method further includes: The second communication apparatus sends indication information indicating the first dataset; and/or the second communication apparatus receives indication information indicating the second dataset.

Based on the foregoing technical solution, the second communication apparatus may serve as a configuring party of the first dataset, and/or the second communication apparatus may serve as a configured party of the second dataset, so that the data receiver and the data sender can obtain a dataset before exchanging data.

Optionally, the first dataset may be preconfigured in the first communication apparatus, and/or the second dataset may be preconfigured in the second communication apparatus. In this manner, overheads can be reduced.

In a possible implementation of the second aspect, the method further includes: The second communication apparatus sends one or both of gradient information and a result of a loss function that are determined based on the third data and the fourth data.

Based on the foregoing technical solution, the second communication apparatus can perform processing based on the second data to obtain the third data, and the second communication apparatus can further determine and send the corresponding gradient information and/or the corresponding result of the loss function based on the third data and the fourth data. In this way, after receiving the gradient information and/or the result of the loss function, the first communication apparatus can update or iterate the first neural network based on the gradient information and/or the result of the loss function.

In a possible implementation of the second aspect, the method further includes: The second communication apparatus receives or sends indication information indicating that the index satisfies the at least one item.

Based on the foregoing technical solution, the second communication apparatus may further receive or send the indication information indicating that the index satisfies the at least one item, so that the data receiver and the data sender can implement alignment of understandings of indexes of data in a dataset based on the indication information, to avoid a data processing error caused by misalignment of the understandings of the index by the data receiver and the data sender, thereby improving system robustness.

A third aspect of this application provides a communication method. The first communication apparatus may be a communication device (for example, a terminal device or a network device), or the first communication apparatus may be a part of components (for example, a processor, a chip, or a chip system) in the communication device, or the first communication apparatus may be a logical module or software that can implement all or a part of functions of the communication device. In the third aspect and possible implementations thereof, an example in which the communication method is performed by the first communication apparatus is used for description. The first communication apparatus may be a terminal device or a network device. In the method, the first communication apparatus processes first data to obtain second data. The first communication apparatus sends the second data and fourth data. The second data is used to determine third data, the fourth data is label data corresponding to the first data, and the second data is obtained by processing the first data based on a first neural network, and/or the third data is obtained by processing the second data based on a second neural network.

Based on the foregoing technical solution, the second data sent by the first communication apparatus is obtained based on the first data. Subsequently, a receiver (for example, a second communication apparatus) of the second data may process the second data to obtain the third data. The first communication apparatus may further send the fourth data. The fourth data is the label data corresponding to the first data. Correspondingly, after receiving the second data, the receiver of the second data and the fourth data can process the third data based on the label data. In addition, one or both of the second data and the third data are obtained based on a neural network. In other words, a neural network used for AI processing may include a neural network deployed in the first communication apparatus and/or a neural network deployed in the second communication apparatus. Therefore, when a communication apparatus in a communication system serves as an AI participating node, computational power of the communication apparatus can be applied to AI processing of a neural network, and flexibility of neural network deployment can be improved.

In addition, the second data sent by the first communication apparatus is a processing result of the first data, and the fourth data sent by the first communication apparatus is the label data corresponding to the first data. Therefore, the processing result of the first data and the label data corresponding to the first data are sent, so that the receiver can perform further processing based on the label data, and the solution can also be applied to a scenario in which a data volume of the label data is small, to reduce transmission overheads of the label data as much as possible.

In a possible implementation of the third aspect, the method further includes: The first communication apparatus receives one or both of gradient information and a result of a loss function that are determined based on the third data and the fourth data.

Based on the foregoing technical solution, the receiver (for example, the second communication apparatus) of the second data can perform processing based on the second data to obtain the third data, and the receiver can further determine and send the corresponding gradient information and/or the corresponding result of the loss function based on the third data and the fourth data. In this way, after receiving the gradient information and/or the result of the loss function, the first communication apparatus can update or iterate the first neural network based on the gradient information and/or the result of the loss function.

A fourth aspect of this application provides a communication method. The method is performed by a second communication apparatus. The second communication apparatus may be a communication device (for example, a terminal device or a network device), or the second communication apparatus may be a part of components (for example, a processor, a chip, or a chip system) in the communication device, or the second communication apparatus may be a logical module or software that can implement all or a part of functions of the communication device. In the fourth aspect and possible implementations thereof, an example in which the communication method is performed by a second communication apparatus is used for description. The second communication apparatus may be a terminal device or a network device. In the method, the second communication apparatus receives second data and fourth data. The second data is obtained based on first data, and the fourth data is label data corresponding to the first data. The second communication apparatus determines third data based on the second data. The second data is obtained by processing the first data based on a first neural network, and/or the third data is obtained by processing the second data based on a second neural network.

Based on the foregoing technical solution, the second data received by the second communication apparatus is obtained based on the first data. Subsequently, the second communication apparatus may process the second data to obtain the third data. The second communication apparatus may further receive fourth data. The fourth data is the label data corresponding to the first data. Correspondingly, after receiving the second data, the second communication apparatus can process the third data based on the label data. In addition, one or both of the second data and the third data are obtained based on a neural network. In other words, a neural network used for AI processing may include a neural network deployed in the first communication apparatus and/or a neural network deployed in the second communication apparatus. Therefore, when a communication apparatus in a communication system serves as an AI participating node, computational power of the communication apparatus can be applied to AI processing of a neural network, and flexibility of neural network deployment can be improved.

In addition, the second data received by the second communication apparatus is a processing result of the first data, and the fourth data sent by the second communication apparatus is the label data corresponding to the first data. Therefore, the processing result of the first data and the label data corresponding to the first data are sent, so that the second communication apparatus can perform further processing based on the label data, and the solution can also be applied to a scenario in which a data volume of the label data is small, to reduce transmission overheads of the label data as much as possible.

In a possible implementation of the fourth aspect, the method further includes: The second communication apparatus sends one or both of gradient information and a result of a loss function that are determined based on the third data and the fourth data.

Based on the foregoing technical solution, the second communication apparatus can perform processing based on the second data to obtain the third data, and the second communication apparatus can further determine and send the corresponding gradient information and/or the corresponding result of the loss function based on the third data and the fourth data. In this way, after receiving the gradient information and/or the result of the loss function, the first communication apparatus can update or iterate the first neural network based on the gradient information and/or the result of the loss function.

A fifth aspect of this application provides a communication method. The method is performed by a first communication apparatus. The first communication apparatus may be a communication device (for example, a terminal device or a network device), or the first communication apparatus may be a part of components (for example, a processor, a chip, or a chip system) in the communication device, or the first communication apparatus may be a logical module or software that can implement all or a part of functions of the communication device. In the fifth aspect and possible implementations thereof, an example in which the communication method is performed by the first communication apparatus is used for description. The first communication apparatus may be a terminal device or a network device. In the method, the first communication apparatus processes first data to obtain second data. The first data is data in a first dataset. The first communication apparatus sends the second data and a first index. The second data is used to determine third data, the first index is used to determine fourth data in a second dataset, the second dataset includes label data corresponding to data in the first dataset, the fourth data is label data corresponding to the first data, and the second data is obtained by processing the first data based on a first neural network, and/or the fourth data is obtained by processing the second data based on a neural network.

Based on the foregoing technical solution, the second data sent by the first communication apparatus is obtained based on the first data. Subsequently, a receiver (for example, a second communication apparatus) of the second data may process the second data to obtain the third data. The first communication apparatus may further send the first index. Correspondingly, after receiving the second data, the receiver of the second data and the fourth data can process the third data based on the label data. In addition, one or both of the second data and the third data are obtained based on a neural network. In other words, a neural network used for AI processing may include a neural network deployed in the first communication apparatus and/or a neural network deployed in the second communication apparatus. Therefore, when a communication apparatus in a communication system serves as an AI participating node, computational power of the communication apparatus can be applied to AI processing of a neural network, and flexibility of neural network deployment can be improved.

In addition, the second data sent by the first communication apparatus is a processing result of the first data, and the fourth data sent by the first communication apparatus is the label data corresponding to the first data. Therefore, the processing result of the first data and the label data corresponding to the first data are sent, so that the receiver can perform further processing based on the label data, and the solution can also be applied to a scenario in which a data volume of the label data is small, to reduce transmission overheads of the label data as much as possible.

It should be understood that, in the foregoing technical solution, the second data is obtained by processing the first data based on the first neural network, and/or the third data is obtained by processing the second data based on the second neural network. The first dataset and the second dataset may be included in one dataset. The one dataset may include N pieces of input data and M pieces of label data. Both N and M are positive integers. In addition, the first dataset may include the N pieces of input data, and the second dataset may include the M pieces of label data. In other words, the first dataset may be referred to as an input dataset, a neural network input dataset, or the like, and the second dataset may be referred to as a label dataset, a neural network label dataset, or the like. In addition, an AI neural network may be processed based on the same dataset, to implement iteration, updating, and the like of the AI neural network.

In a possible implementation, the first index is determined based on a second index of the first data in the first dataset.

In an implementation example, when each of the N pieces of input data corresponds to different pieces of label data in the M pieces of label data, a value of N is equal to a value of M.

For example, the first index may be the same as the second index of the first data in the first dataset. In other words, label data of an i^{th} piece of input data in the first dataset is a j^{th} piece of data in the second dataset, i is the first index, j is the second index, and i is equal to j. To be specific, label data of a 1 ^{st} piece of data in the N pieces of input data is a 1 ^{st} piece of data in the M pieces of label data, label data of a 2^{nd} piece of data in the N pieces of input data is a 2^{nd} piece of data in the M pieces of label data, and by analogy, label data of an N^{th} piece of data in the N pieces of input data is an M^{th} piece of data in the M pieces of label data (N is equal to M).

For another example, the first index may be partially different from or completely different from the second index of the first data in the first dataset. In other words, label data of an i^{th} piece of input data in the first dataset is a j^{th} piece of data in the second dataset, i is the first index, j is the second index, and i and j may be partially or completely unequal. A mapping relationship between i and j may be preconfigured.

The mapping relationship between i and j may be an example of a preconfiguration. i may be traversed from 1 to N, and j may be traversed from N (N is equal to M) to 1. For example, a value of N and a value of M are both 3. Label data of a 1^{st} piece of data in the N pieces of input data is a 3^{rd} piece of data in the M pieces of label data, label data of a 2^{nd} piece of data in the N pieces of input data is a 2^{nd} piece of data in the M pieces of label data, and label data of a 3^{rd} piece of data in the N pieces of input data is a 1^{st} piece of data in the M pieces of label data. In this example, the first index may be partially different from the second index of the first data in the first dataset.

The mapping relationship between i and j may be another example of a preconfiguration, and the mapping relationship between i and j may be configured or preconfigured, so that a data receiver and a data sender are aligned. For example, a value of N and a value of M are still both 3. Label data of a 1^{st} piece of data in the N pieces of input data is a 3^{rd} piece of data in the M pieces of label data, label data of a 2^{nd} piece of data in the N pieces of input data is a 1^{st} piece of data in the M pieces of label data, and label data of a 3^{rd} piece of data in the N pieces of input data is a 2^{nd} piece of data in the M pieces of label data. In this example, the first index may be completely different from the second index of the first data in the first dataset.

In another implementation example, a mapping relationship between the first index and the second index of the first data in the first dataset is preconfigured.

For example, when at least two of the N pieces of input data correspond to one piece of same label data in the M pieces of label data, a value of N may be greater than or equal to a value of M. Correspondingly, in this case, the first index may be less than or equal to the second index of the first data in the first dataset.

For another example, when one of the N pieces of input data corresponds to at least two of the M pieces of label data, a value of N may be less than or equal to a value of M. Correspondingly, in this case, the first index may be greater than or equal to the second index of the first data in the first dataset.

In a possible implementation of the fifth aspect, the method further includes: The first communication apparatus receives one or both of gradient information and a result of a loss function that are determined based on the third data and the fourth data.

Based on the foregoing technical solution, the receiver (for example, the second communication apparatus) of the second data can perform processing based on the second data to obtain the third data, and the receiver can further determine and send the corresponding gradient information and/or the corresponding result of the loss function based on the third data and the fourth data. In this way, after receiving the gradient information and/or the result of the loss function, the first communication apparatus can update or iterate the first neural network based on the gradient information and/or the result of the loss function.

A sixth aspect of this application provides a communication method. The method is performed by a second communication apparatus. The second communication apparatus may be a communication device (for example, a terminal device or a network device), or the second communication apparatus may be a part of components (for example, a processor, a chip, or a chip system) in the communication device, or the second communication apparatus may be a logical module or software that can implement all or a part of functions of the communication device. In the sixth aspect and possible implementations thereof, an example in which the communication method is performed by a second communication apparatus is used for description. The second communication apparatus may be a terminal device or a network device. In the method, the second communication apparatus receives second data and a first index. The second data is obtained based on first data, the first data is data in a first dataset, the first index is used to determine fourth data in a second dataset, the second dataset includes label data corresponding to data in the first dataset, and the fourth data is label data corresponding to the first data. The second communication apparatus determines third data based on the second data. The second data is obtained by processing the first data based on a first neural network, and/or the third data is obtained by processing the second data based on a second neural network.

Based on the foregoing technical solution, the second data received by the second communication apparatus is obtained based on the first data. Subsequently, the second communication apparatus may process the second data to obtain the third data. The second communication apparatus may further receive the first index. Correspondingly, after receiving the second data, the second communication apparatus can process the third data based on the label data. In addition, one or both of the second data and the third data are obtained based on a neural network. In other words, a neural network used for AI processing may include a neural network deployed in the first communication apparatus and/or a neural network deployed in the second communication apparatus. Therefore, when a communication apparatus in a communication system serves as an AI participating node, computational power of the communication apparatus can be applied to AI processing of a neural network, and flexibility of neural network deployment can be improved.

In addition, the second data received by the second communication apparatus is a processing result of the first data, and the fourth data received by the second communication apparatus is the label data corresponding to the first data. Therefore, the processing result of the first data and the label data corresponding to the first data are sent, so that the second communication apparatus can perform further processing based on the label data, and the solution can also be applied to a scenario in which a data volume of the label data is small, to reduce transmission overheads of the label data as much as possible.

Optionally, the first index is determined based on a second index of the first data in the first dataset.

In a possible implementation of the sixth aspect, the method further includes: The second communication apparatus sends one or both of gradient information and a result of a loss function that are determined based on the third data and the fourth data.

Based on the foregoing technical solution, the second communication apparatus can perform processing based on the second data to obtain the third data, and the second communication apparatus can further determine and send the corresponding gradient information and/or the corresponding result of the loss function based on the third data and the fourth data. In this way, after receiving the gradient information and/or the result of the loss function, the first communication apparatus can update or iterate the first neural network based on the gradient information and/or the result of the loss function.

A seventh aspect of this application provides a communication apparatus. The apparatus is a first communication apparatus, and the apparatus includes a transceiver unit and a processing unit. The processing unit is configured to process first data to obtain second data. The first data is data in a first dataset. The transceiver unit is configured to send the second data. The second data is used to determine third data, an index of the first data in the first dataset is used to determine fourth data in a second dataset, the second dataset includes label data corresponding to data in the first dataset, the fourth data is label data corresponding to the first data, and the second data is obtained by processing the first data based on a first neural network, and/or the third data is obtained by processing the second data based on a second neural network. The index satisfies at least one of the following items: the index is determined based on a resource carrying the second data; and the index is determined based on a quantity of processing times of the data in the first dataset.

In the seventh aspect of this application, a constituent module of the communication apparatus may be further configured to: perform the steps performed in the possible implementations of the first aspect, and achieve corresponding technical effects. For details, refer to the first aspect. Details are not described herein again.

An eighth aspect of this application provides a communication apparatus. The apparatus is a second communication apparatus, and the apparatus includes a transceiver unit and a processing unit. The transceiver unit is configured to receive second data. The second data is obtained by processing based on first data, the first data is data in a first dataset, an index of the first data in the first dataset is used to determine fourth data in a second dataset, the second dataset includes label data corresponding to data in the first dataset, and the fourth data is label data corresponding to the first data. The processing unit is configured to determine third data based on the second data. The second data is obtained by processing the first data based on a first neural network, and/or the third data is obtained by processing the second data based on a second neural network. The index satisfies at least one of the following items: the index is determined based on a resource carrying the second data, and the index is determined based on a quantity of processing times of the data in the second dataset.

In the eighth aspect of this application, a constituent module of the communication apparatus may be further configured to: perform the steps performed in the possible implementations of the second aspect, and achieve corresponding technical effects. For details, refer to the second aspect. Details are not described herein again.

A ninth aspect of this application provides a communication apparatus. The apparatus is a first communication apparatus, and the apparatus includes a transceiver unit and a processing unit. The processing unit is configured to process first data to obtain second data. The transceiver unit is configured to send the second data and fourth data. The second data is used to determine third data, the fourth data is label data corresponding to the first data, and the second data is obtained by processing the first data based on a first neural network, and/or the third data is obtained by processing the second data based on a second neural network.

In the ninth aspect of this application, a constituent module of the communication apparatus may be further configured to: perform the steps performed in the possible implementations of the third aspect, and achieve corresponding technical effects. For details, refer to the third aspect. Details are not described herein again.

A tenth aspect of this application provides a communication apparatus. The apparatus is a second communication apparatus, and the apparatus includes a transceiver unit and a processing unit. The transceiver unit is configured to receive second data and fourth data. The second data is obtained based on first data, and the fourth data is label data corresponding to the first data. The processing unit is configured to determine third data based on the second data. The second data is obtained by processing the first data based on a first neural network, and/or the third data is obtained by processing the second data based on a second neural network.

In the tenth aspect of this application, a constituent module of the communication apparatus may be further configured to perform the steps performed in the possible implementations of the fourth aspect, and achieve corresponding technical effects. For details, refer to the fourth aspect. Details are not described herein again.

An eleventh aspect of this application provides a communication apparatus. The apparatus is a first communication apparatus, and the apparatus includes a transceiver unit and a processing unit. The processing unit is configured to process first data to obtain second data. The first data is data in a first dataset. The transceiver unit is configured to send the second data and a first index. The second data is used to determine third data, the first index is used to determine fourth data in a second dataset, the second dataset includes label data corresponding to data in the first dataset, the fourth data is label data corresponding to the first data, and the second data is obtained by processing the first data based on a first neural network, and/or the fourth data is obtained by processing the second data based on a neural network.

In the eleventh aspect of this application, a constituent module of the communication apparatus may be further configured to perform the steps performed in the possible implementations of the fifth aspect, and achieve corresponding technical effects. For details, refer to the fifth aspect. Details are not described herein again.

A twelfth aspect of this application provides a communication apparatus. The apparatus is a second communication apparatus, and the apparatus includes a transceiver unit and a processing unit. The transceiver unit is configured to receive second data and a first index. The second data is obtained based on first data, the first data is data in a first dataset, the first index is used to determine fourth data in a second dataset, the second dataset includes label data corresponding to data in the first dataset, and the fourth data is label data corresponding to the first data. The processing unit is configured to determine third data based on the second data. The second data is obtained by processing the first data based on a first neural network, and/or the third data is obtained by processing the second data based on a second neural network.

In the twelfth aspect of this application, a constituent module of the communication apparatus may be further configured to perform the steps performed in the possible implementations of the sixth aspect, and achieve corresponding technical effects. For details, refer to the sixth aspect. Details are not described herein again.

A thirteenth aspect of this application provides a communication apparatus, including at least one processor. The at least one processor is coupled to a memory, the memory is configured to store a program or instructions, and the at least one processor is configured to execute the program or the instructions, to enable the apparatus to implement the method according to any possible implementation in any one of the first aspect to the sixth aspect.

A fourteenth aspect of this application provides a communication apparatus, including at least one logic circuit and an input/output interface. The logic circuit is configured to perform the method according to any possible implementation in any one of the first aspect to the sixth aspect.

A fifteenth aspect of this application provides a communication system. The communication system includes the foregoing first communication apparatus and the foregoing second communication apparatus.

A sixteenth aspect of this application provides a computer-readable storage medium. The storage medium is configured to store one or more computer-executable instructions. When the computer-executable instructions are executed by a processor, the processor performs the method according to any possible implementation in any one of the first aspect to the sixth aspect.

A seventeenth aspect of this application provides a computer program product (or referred to as a computer program). When the computer program in the computer program product is executed by a processor, the processor performs the method according to any possible implementation in any one of the first aspect to the sixth aspect.

An eighteenth aspect of this application provides a chip system. The chip system includes at least one processor, configured to support a communication apparatus in implementing the method according to any possible implementation in any one of the first aspect to the sixth aspect.

In a possible design, the chip system may further include a memory. The memory is configured to store program instructions and data that are necessary for the first communication apparatus. The chip system may include a chip, or may include a chip and another discrete component. Optionally, the chip system further includes an interface circuit, and the interface circuit provides program instructions and/or data for the at least one processor.

For technical effects brought by any design in the seventh aspect to the eighteenth aspect, refer to technical effects brought by different designs in the first aspect to the sixth aspect. Details are not described herein again.

### BRIEF DESCRIPTION OF DRAWINGS

FIG. 1a to FIG. 1c are diagrams of a communication system according to this application;
FIG. 1d, FIG. 1e, and FIG. 2a to FIG. 2f are diagrams of an AI processing process according to this application;
FIG. 3 is a diagram of interaction of a communication method according to this application;
FIG. 4 and FIG. 5 are diagrams of an AI processing process according to this application;
FIG. 6 and FIG. 7 are diagrams of interaction of communication methods according to this application; and
FIG. 8 to FIG. 12 are diagrams of communication apparatuses according to this application.

### DESCRIPTION OF EMBODIMENTS

First, some terms in embodiments of this application are described for ease of understanding by a person skilled in the art.
(1) A terminal device may be a wireless terminal device that can receive scheduling and indication information of a network device. The wireless terminal device may be a device providing voice and/or data connectivity for a user, a handheld device having a wireless connection function, or another processing device connected to a wireless modem.

The terminal device may communicate with one or more core networks or the Internet through a radio access network (radio access network, RAN). The terminal device may be a mobile terminal device such as a mobile telephone (also referred to as a "cellular" phone or a mobile phone (mobile phone)), a computer, and a data card. For example, the terminal device may be a portable, pocket-sized, handheld, computer built-in, or vehicle-mounted mobile apparatus that exchanges voice and/or data with the radio access network. For example, the terminal device may be a device such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal device (remote terminal), an access terminal device (access terminal), a user terminal device (user terminal), a user agent (user agent), a subscriber station device (subscriber station, SS), customer premises equipment (customer premises equipment, CPE), a terminal (terminal), user equipment (user equipment, UE), a mobile terminal (mobile terminal, MT), or the like.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that are dedicated to only one type of application function and need to collaboratively work with other devices such as smartphones, for example, various smart bands, smart helmets, or smart jewelry for monitoring physical signs.

The terminal may alternatively be an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), or the like.

In addition, the terminal device may alternatively be a terminal device in a communication system (for example, a 6th generation (6th generation, 6G) communication system) evolved after a 5th generation (5th generation, 5G) communication system, a terminal device in a future evolved public land mobile network (public land mobile network, PLMN), or the like. For example, a 6G network may further extend a form and a function of a 5G communication terminal, and a 6G terminal includes but is not limited to a vehicle, a cellular network terminal (integrating a function of a satellite terminal), an uncrewed aerial vehicle, and an Internet of things (internet of things, IoT) device.

In embodiments of this application, the terminal device may further obtain an AI service provided by a network device. Optionally, the terminal device may further have an AI processing capability.

(2) A network device may be a device in a wireless network. For example, the network device may be a RAN node (or device) connecting a terminal device to the wireless network, and may also be referred to as a base station. Currently, some examples of the RAN device are a base station (base station), an evolved NodeB (evolved NodeB, eNodeB), a base station gNB (gNodeB) in a 5G communication system, a transmission reception point (transmission reception point, TRP), an evolved NodeB (evolved NodeB, eNB), a radio network controller (radio network controller, RNC), a NodeB (NodeB, NB), a home base station (for example, a home evolved NodeB, or a home NodeB, HNB), a baseband unit (baseband unit, BBU), a wireless fidelity (wireless fidelity, Wi-Fi) access point AP, and the like. In addition, in a network structure, the network device may include a central unit (central unit, CU) node, a distributed unit (distributed unit, DU) node, or a RAN device including a CU node and a DU node.

Optionally, the RAN node may alternatively be a macro base station, a micro base station, an indoor base station, a relay node, or a donor node, or may be a radio controller in a cloud radio access network (cloud radio access network, CRAN) scenario. The RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes coordinate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Communication between the access network device and the terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between network elements in the ORAN system and protocol layer functions that may be implemented by the network elements, refer to Table 1.

**Table 1**

| ORAN network element | 3GPP protocol layer function |
|---|---|
| O-CU-CP | RRC+PCDP-control plane (PDCP-C) |
| O-CU-UP | SDAP+PCDP-user plane (PDCP-U) |
| O-DU | RLC+MAC+PHY-high |
| O-RU | PHY-low |

The network device may be another apparatus that provides a wireless communication function to the terminal device. A specific technology and a specific device form that are used by the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), and a public data network gateway (public data network gateway, PDN gateway, P-GW) in a 4th generation (4th generation, 4G) network, and an access and mobility management function (access and mobility management function, AMF), a user plane function (user plane function, UPF), and a session management function (session management function, SMF) in a 5G network. In addition, the core network device may further include another core network device in the 5G network and a next generation network of the 5G network.

In embodiments of this application, the network device may alternatively be a network node having an AI capability, and may provide an AI service for a terminal or another network device, for example, may be an AI node, a computational power node, a RAN node having an AI capability, or a core network element having an AI capability on a network side (an access network or a core network).

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is a network device is used for describing the technical solutions provided in embodiments of this application.

(3) Configuration and preconfiguration: In this application, both the configuration and the preconfiguration are used. The configuration means that a network device/server sends configuration information of some parameters or values of parameters to a terminal by using a message or signaling, so that the terminal determines, based on the values or the information, a communication parameter or a resource used for transmission. Similar to the configuration, the pre-configuration may be parameter information or a parameter value negotiated by a network device/server with a terminal device in advance, or may be parameter information or a parameter value used by a base station/network device or a terminal device as specified in a standard protocol, or may be parameter information or a parameter value prestored in a base station/server or a terminal device. This is not limited in this application.

Further, these values and parameters may be changed or updated.

(4) Terms "system" and "network" in embodiments of this application may be used interchangeably. "A plurality of' means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects.

(5) "Sending" and "receiving" in embodiments of this application represent signal transmission directions. For example, "sending information to XX" may be understood as that a destination end of the information is XX, and may include direct sending through an air interface, or may include indirect sending through an air interface by another unit or module. "Receiving information from YY" may be understood as that a source end of the information is YY, and may include direct receiving from YY through an air interface, or may include indirect receiving from YY through an air interface from another unit or module. The "sending" may alternatively be understood as "output" of a chip interface, and the "receiving" may alternatively be understood as "input" into the chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as encoding and modulation, may be performed on the information between the source at which the information is sent and the destination, but the destination may understand valid information from the source. Similar descriptions in this application may be understood similarly, and details are not described again.

(6) In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may alternatively be indicated by using an arrangement sequence of pieces of information that are pre-agreed on (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be for determining to-be-indicated information.

In this application, unless otherwise specified, for same or similar parts of embodiments, mutual reference may be made between the embodiments. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logic relationship thereof. The following implementations of this application do not constitute a limitation on the protection scope of this application.

This application may be applied to a long term evolution (long term evolution, LTE) system, a new radio (new radio, NR) system, or a communication system (for example, 6G) evolved after 5G. The communication system includes at least one network device and/or at least one terminal device.

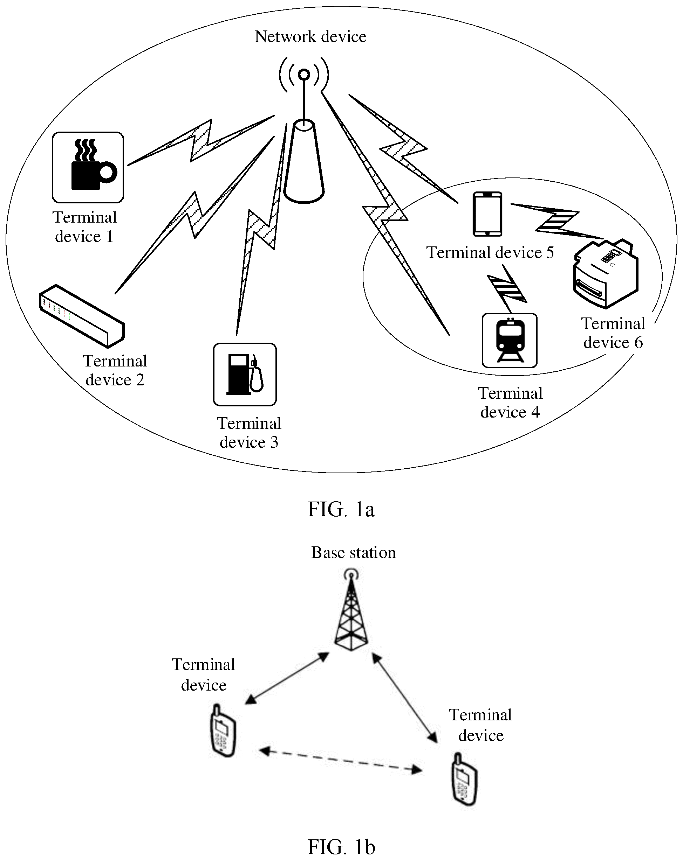

FIG. 1a is a diagram of a communication system according to this application. FIG. 1a shows an example of one network device and six terminal devices. The six terminal devices are a terminal device 1, a terminal device 2, a terminal device 3, a terminal device 4, a terminal device 5, and a terminal device 6. In the example shown in FIG. 1a, an example in which the terminal device 1 is a smart teacup, the terminal device 2 is a smart air conditioner, the terminal device 3 is a smart fuel dispenser, the terminal device 4 is a vehicle, the terminal device 5 is a mobile phone, and the terminal device 6 is a printer is used for description.

As shown in FIG. 1a, an AI configuration information sending entity may be the network device. AI configuration information receiving entities may be the terminal device 1 to the terminal device 6. In this case, the network device and the terminal device 1 to the terminal device 6 form a communication system. In the communication system, the terminal device 1 to the terminal device 6 may send data to the network device, and the network device needs to receive the data sent by the terminal device 1 to the terminal device 6. Besides, the network device may send configuration information to the terminal device 1 to the terminal device 6.

For example, in FIG. 1a, the terminal device 4 to the terminal device 6 may also form a communication system. The terminal device 5 serves as a network device, that is, an AI configuration information sending entity. The terminal device 4 and the terminal device 6 serve as terminal devices, that is, AI configuration information receiving entities. For example, in an internet of vehicles system, the terminal device 5 sends AI configuration information separately to the terminal device 4 and the terminal device 6, and receives data sent by the terminal device 4 and the terminal device 6; and correspondingly, the terminal device 4 and the terminal device 6 receive the AI configuration information sent by the terminal device 5, and send the data to the terminal device 5.

The communication system shown in FIG. 1a is used as an example. In addition to a communication-related service, an AI-related service may be performed between different devices (including between network devices, between a network device and a terminal device, and/or between terminal devices).

As shown in FIG. 1b, an example in which the network device is a base station is used. A communication-related service and an AI-related service may be performed between the base station and one or more terminal devices, and a communication-related service and an AI-related service may also be performed between different terminal devices.

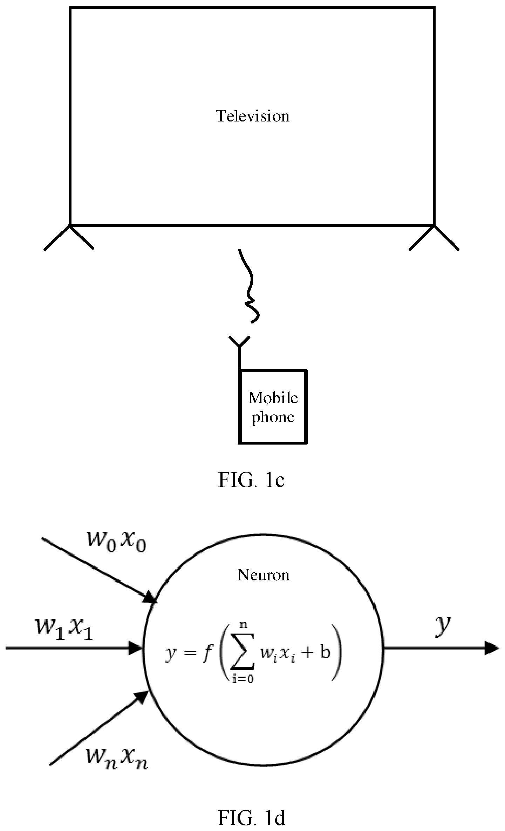

As shown in FIG. 1c, an example in which terminal devices include a television and a mobile phone is used. A communication-related service and an AI-related service may also be performed between the television and the mobile phone.

The technical solutions provided in this application may be applied to a wireless communication system (for example, the system shown in FIG. 1a, FIG. 1b, or FIG. 1c). For example, an AI network element may be introduced to the communication system provided in this application to implement some or all AI-related operations. The AI network element may also be referred to as an AI node, an AI device, an AI entity, an AI module, an AI model, an AI unit, or the like. The AI network element may be built in a network element in the communication system. For example, the AI network element may be an AI module built in the access network device, the core network device, a cloud server, or a network management system (operation, administration and maintenance, OAM), to implement an AI-related function. The OAM may serve as a network management system of the core network device and/or as a network management system of the access network device. Alternatively, the AI network element may be an independently disposed network element in the communication system. Optionally, the terminal or the chip built in the terminal may alternatively include the AI entity, configured to implement the AI-related function.

The following briefly describes artificial intelligence (artificial intelligence, AI) that may be used in this application.

The artificial intelligence (artificial intelligence, AI) may enable machines to have human intelligence, for example, can enable the machines to use computer software and hardware to simulate some intelligent human behaviors. To implement the artificial intelligence, a machine learning method may be used. In the machine learning method, a machine obtains a model through learning (or training) by using training data. The model represents mapping from an input to an output. The model obtained through learning may be used for inference (or prediction). To be specific, the model may be used to predict an output corresponding to a given input. The output may also be referred to as an inference result (or a prediction result).

Machine learning may include supervised learning, unsupervised learning, and reinforcement learning. The unsupervised learning may also be referred to as non-supervised learning.

The supervised learning is used as an example. In terms of the supervised learning, based on collected sample values and sample labels, a mapping relationship between the sample values and the sample labels is learned by using a machine learning algorithm, and the learned mapping relationship is expressed by using an AI model. A process of training a machine learning model is a process of learning the mapping relationship. In the training process, a sample value is input into the model to obtain a predicted value of the model, and a model parameter is optimized by calculating an error between the predicted value of the model and a sample label (ideal value). After the mapping relationship is learned, a new sample label may be predicted by using the learned mapping. The mapping relationship learned through the supervised learning may include linear mapping or non-linear mapping. A learning task may be classified into a classification task and a regression task based on a type of a label.

In other words, an objective of the supervised learning may be to learn a mapping relationship between input data and output data (namely, label data) in a training set (including a plurality of pairs of input data and label data) by giving the training set. In addition, it is expected that the mapping relationship can be further applied to data outside the training set. The training set is a set of correct input-output pairs.

A neural network (neural network, NN) is a specific model in a machine learning technology. According to a universal approximation theorem, the neural network can theoretically approximate any continuous function, so that the neural network has a capability of learning any mapping. In a conventional communication system, rich expertise is required to design a communication module. However, in a neural network-based deep learning communication system, an implicit pattern structure may be automatically discovered from a large quantity of datasets and a mapping relationship between data may be established, to obtain performance better than that of a conventional modeling method.

The idea of the neural network comes from a neuron structure of brain tissue. For example, each neuron performs a weighted summation operation on input values of the neuron, and outputs an operation result through an activation function.

FIG. 1d is a diagram of a neuron structure. It is assumed that an input of a neuron is *x* = [*x*₀, *x*₁, *... , xₙ*], and a weight corresponding to each input is *w* = [*w*, *w*₁, *..., wₙ*], where n is a positive integer, *wᵢ* and *xᵢ* may be various possible types such as a decimal, an integer (for example, 0, a positive integer, or a negative integer), or a complex number. *wᵢ* is used as a weight of *xᵢ*, and is used to weight *xᵢ*. A bias for performing weighted summation on the input values based on the weights is, for example, b. There may be a plurality of forms of the activation function. If an activation function of a neuron is *y* = *f*(*z*) = max(0, *z*), an output of the neuron is $y = f \left({\sum }_{i = 0}^{i = n} {w}_{i} ∗ {x}_{i} + b\right) = max \left(0, {\sum }_{i = 0}^{i = n} {w}_{i} ∗ {x}_{i} + b\right)$ . For another example, an activation function of a neuron is y = *f*(*z*) *= z ,* and an output of the neuron is $y = f \left({\sum }_{i = 0}^{i = n} {w}_{i} ∗ {x}_{i} + b\right) = {\sum }_{i = 0}^{i = n} {w}_{i} ∗ {x}_{i} + b$ *.* b may be various possible types such as a decimal, an integer (for example, 0, a positive integer, or a negative integer), or a complex number. Activation functions of different neurons in the neural network may be the same or different.

In addition, the neural network usually includes a plurality of layers, and each layer may include one or more neurons. One or both of a depth and a width of the neural network are increased, so that an expression capability of the neural network can be improved, and a more powerful information extraction and abstraction modeling capability can be provided for a complex system. The depth of the neural network may be a quantity of layers included in the neural network, and a quantity of neurons included at each layer may be referred to as a width of the layer. In an implementation, the neural network includes an input layer and an output layer. The input layer of the neural network performs neuron processing on received input information, and transfers a processing result to the output layer. The output layer obtains an output result of the neural network. In another implementation, the neural network includes an input layer, a hidden layer, and an output layer. The input layer of the neural network performs neuron processing on received input information, and transfers a processing result to an intermediate hidden layer. The hidden layer performs calculation on the received processing result to obtain a calculation result. The hidden layer transfers the calculation result to the output layer or a next adjacent hidden layer. Finally, the output layer obtains an output result of the neural network. One neural network may include one hidden layer, or include a plurality of hidden layers that are sequentially connected. This is not limited.

The neural network is, for example, a deep neural network (deep neural network, DNN). According to a network construction manner, the DNN may include a feedforward neural network (feedforward neural network, FNN), a convolutional neural network (convolutional neural network, CNN), and a recurrent neural network (recurrent neural network, RNN).

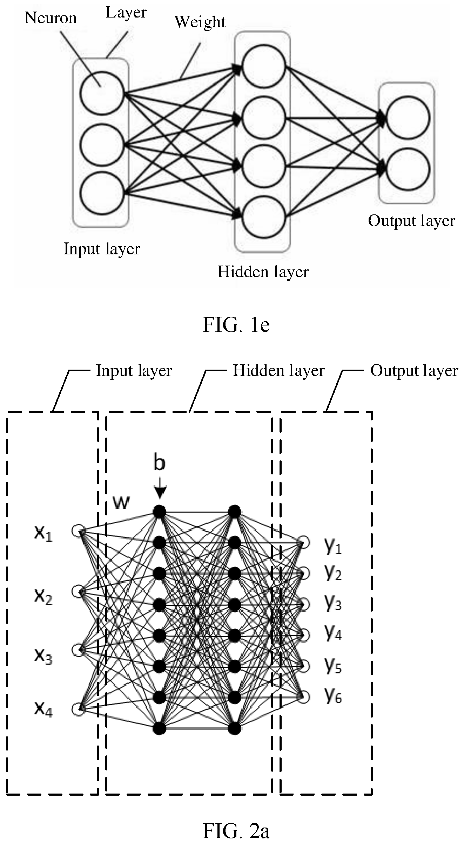

FIG. 1e is a diagram of an FNN network. A feature of the FNN network is that neurons at adjacent layers are completely connected to each other. Due to this feature, the FNN usually needs a large amount of storage space, resulting in high computing complexity.

The CNN is a neural network dedicated to processing data of a similar grid structure. For example, both time series data (timeline discrete sampling) and image data (two-dimensional discrete sampling) may be considered as the data of the similar grid structure. The CNN performs a convolution operation by capturing partial information through a window with a fixed size, instead of performing an operation based on all input information at one time. This greatly reduces a calculation amount of a model parameter. In addition, based on different types of information captured through the window (for example, a person and an object in a same image are information of different types), different convolution kernel operations may be used for each window, so that the CNN can better extract a feature of input data.

The RNN is a DNN network using feedback time series information. Inputs of the RNN include a new input value at a current moment and an output value of the RNN at a previous moment. The RNN is suitable for obtaining a sequence feature having a time correlation, and is especially suitable for applications such as speech recognition and channel encoding and decoding.

In the foregoing model training process of machine learning, a loss function may be defined. The loss function describes a gap or a difference between an output value of the model and an ideal target value. The loss function may be expressed in a plurality of forms, and a specific form of the loss function is not limited. The model training process may be considered as the following process: A part or all of parameters of the model are adjusted, so that a value of the loss function is less than a threshold or meets a target requirement.

The model may also be referred to as an AI model, a rule, another name, or the like. The AI model may be considered as a specific method for implementing an AI function. The AI model represents a mapping relationship or a function between an input and an output of the model. The AI function may include one or more of the following: data collection, model training (or model learning), model information release, model deduction (also referred to as model inference, inference, prediction, or the like), model monitoring or model verification, inference result release, or the like. The AI function may also be referred to as an AI (AI-related) operation or an AI-related function.

The following describes an example of an implementation process of a neural network with reference to the accompanying drawings.
1. A fully-connected neural network is also referred to as a multilayer perceptron (multilayer perceptron, MLP).

As shown in FIG. 2a, one MLP includes one input layer (left side), one output layer (right side), and a plurality of hidden layers (middle). Each layer of the MLP includes several nodes, which are referred to as neurons. Neurons at two neighboring layers are connected to each other in pairs.

Optionally, in consideration of neurons at two neighboring layers, an output h of a neuron at a lower layer is a weighted sum of all neurons x at an upper layer connected to the neuron at the lower layer, and may be expressed, by using an activation function, as: $h = f \left(wx+b\right)$

Herein, w is a weight matrix, b is a bias vector, and f is the activation function.

Further, optionally, the output of the neural network may be recursively expressed as: $y = {f}_{n} \left({w}_{n}{f}_{n - 1}\left(…\right)+{b}_{n}\right)$

Herein, n is an index of the neural network layer, 1≤n≤N, and N is a total quantity of layers of the neural network.

In other words, the neural network may be understood as a mapping relationship from an input dataset to an output dataset. The neural network is usually initialized randomly, and a process of obtaining the mapping relationship from random w and b based on existing data is referred to as training of the neural network.

Optionally, a specific training manner is to evaluate an output result of the neural network by using a loss function (loss function).

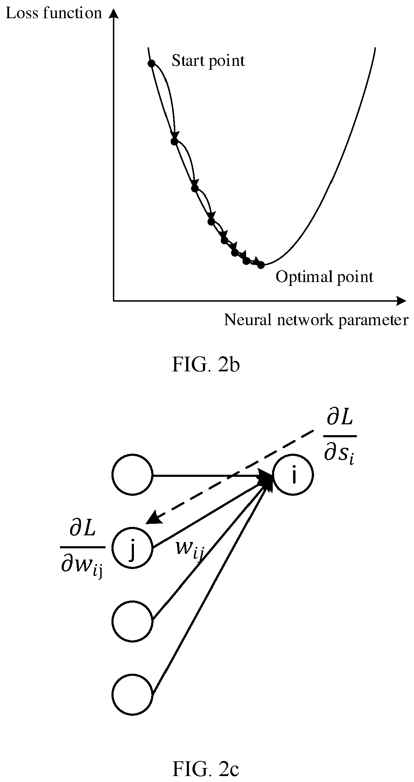

As shown in FIG. 2b, an error may be backpropagated, and neural network parameters (including w and b) can be iteratively optimized in a gradient descent method until the loss function reaches a minimum value, namely, "a better point (for example, an optimal point)" in FIG. 2b. It may be understood that the neural network parameter corresponding to "the better point (for example, the optimal point)" in FIG. 2b may be used as a neural network parameter in trained AI model information.

Further, optionally, a gradient descent process may be expressed as: $θ ← θ - η \frac{\partial L}{\partial θ}$

Herein, ***θ*** is a to-be-optimized parameter (including **w** and **b**), L is the loss function, η is a learning rate for controlling a gradient descent step, ∂ represents a derivative operation, and $\frac{\partial L}{\partial θ}$ represents a derivative of *L* with respect to ***θ***.

Further, optionally, a backpropagation process uses a chain rule for finding a partial derivative.

As shown in FIG. 2c, a gradient of a parameter at a previous layer may be obtained by recursive calculation of a gradient of a parameter at a next layer, and may be expressed as: $\frac{\partial L}{\partial {w}_{i j}} = \frac{\partial L}{\partial {s}_{i}} \frac{\partial {s}_{i}}{\partial {w}_{ij}}$

Herein, wᵢⱼ is a weight of a connection between the node j and the node i, and sᵢ is a weighted sum of inputs into the node i.

2. Federated learning (Federated Learning, FL)

A concept of the federated learning is proposed to effectively resolve difficulties faced by current development of artificial intelligence. While ensuring user data privacy and security, the federated learning facilitates various edge devices and a server at a central end to collaborate to efficiently complete a learning task of a model.

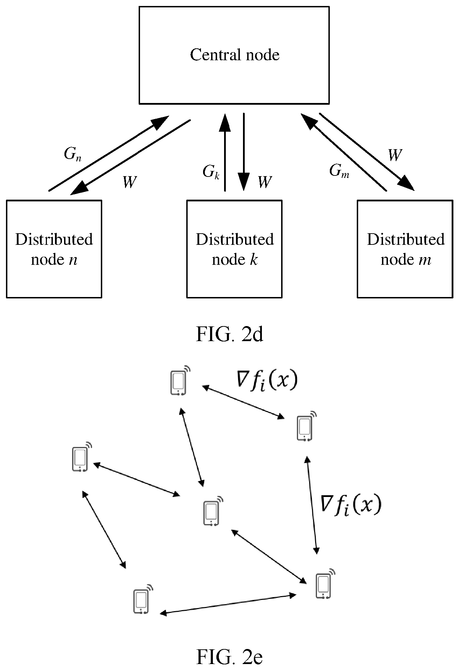

As shown in FIG. 2d, an FL architecture is a currently most widely used training architecture in the FL field. A FedAvg algorithm is a basic algorithm of FL. An algorithm procedure of the FedAvg algorithm is roughly as follows:
(1) The central end initializes a to-be-trained model ${w}_{g}^{0}$ and broadcasts and sends the model to all client devices.
(2) In a t^{th} (*t* ∈ [1*, T*]) round, a client *k* ∈ [1, *K*] performs *E* epochs of training on a received global model ${w}_{g}^{t - 1}$ based on a local dataset 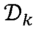 to obtain a local training result ${w}_{k}^{t}$, and reports the local training result to a central node.
(3) The central node summarizes and collects local training results from all (or some) clients. It is assumed that a set of clients that upload a local model in a *t*^{th} round is 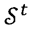 *.* The central end performs weighted averaging by using a quantity of samples of a corresponding client as a weight to obtain a new global model, and a specific update rule is 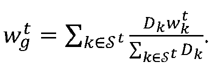 Then, the central end broadcasts and sends a global model ${w}_{g}^{t}$ of a latest version to all client devices for a new round of training.
(4) Steps (2) and (3) are repeated until the model converges finally or a quantity of training rounds reaches an upper limit.

In addition to reporting the local model ${w}_{k}^{t}$, a trained local gradient ${g}_{k}^{t}$ may also be reported. The central node averages the local gradient, and updates the global model based on a direction of the average gradient.

It can be learned that, in the FL framework, a dataset exists on a distributed node. To be specific, the distributed node collects a local dataset, performs local training, and reports a local result (a model or a gradient) obtained through training to the central node. The central node does not have a dataset, is only responsible for fusing training results of distributed nodes to obtain a global model, and delivers the global model to the distributed nodes.

3. Decentralized learning: Unlike federated learning, another distributed learning architecture is decentralized learning.

As shown in FIG. 2e, a fully distributed system without a central node is considered. A design target *f*(*x*) of a decentralized learning system is usually an average value of targets *fᵢ*(*x*) of all nodes, that is, $f \left(x\right) = \frac{1}{n} {\sum }_{i = 1}^{n} {f}_{i} \left(x\right)$, where *n* is a quantity of distributed nodes, *x* is a to-be-optimized parameter, and in machine learning, *x* is a parameter of a machine learning (for example, a neural network) model. Each node calculates a local gradient *∇fᵢ*(*x*) based on local data and the local target *fᵢ*(*x*), and then sends the local gradient to a neighboring node that is reachable in communication. After receiving gradient information sent by a neighboring node of any node, the node may update a parameter *x* of a local model based on the following formula:

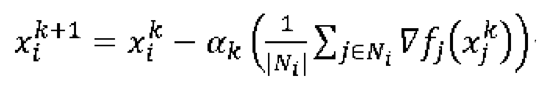

Herein, ${x}_{i}^{k + 1}$ represents a parameter that is of the local model and that is obtained through a (k+1)^{th} (k is a natural number) time of updating in an i^{th} node, ${x}_{i}^{k}$ represents a parameter that is of the local model and that is obtained through a k^{th} time of updating in the i^{th} node (if k is 0, it represents that ${x}_{i}^{k}$ is a parameter that is of the local model and that exists before updating in the i^{th} node), αₖ represents an optimization coefficient, *Nᵢ* is a set of neighboring nodes of the node *i,* and |*Nᵢ*| represents a quantity of elements in the set of neighboring nodes of the node *i,* namely, a quantity of neighboring nodes of the node *i.* Through information exchange between nodes, the decentralized learning system will finally learn a unified model.

The technical solutions provided in this application may be applied to a wireless communication system (for example, the system shown in FIG. 1a or FIG. 1b). In the wireless communication system, a communication node usually has a signal receiving and sending capability and a computing capability. A network device having a computing capability is used as an example. The computing capability of the network device is mainly providing computational power support for a signal receiving and sending capability (for example, performing sending processing and receiving processing on a signal), to implement a communication task between the network device and another communication node.

In a communication network, in addition to providing computational power support for the foregoing communication task based on the computing capability of the communication node, the communication node may further have a surplus computing capability. Therefore, how to use these computing capabilities is an urgent technical problem to be resolved.

In a possible implementation, the communication node may serve as a participating node of an AI learning system, and computational power of the communication node is applied to a phase of the AI learning system. With advent of the large model era, a deep learning model with massive parameters, for example, bidirectional encoder representation from transformers (bidirectional encoder representation from transformers, BERT) or a generative pre-trained transformer (generative pre-trained transformer, GPT), can complete increasingly complex tasks and achieve better performance. However, for a large model, even an inference process of the model is limited by a device capacity. Therefore, the large model is usually stored on a cloud central server. In addition, each device in a network generates a large amount of raw data every day, and the data needs to invoke the large model a plurality of times for inference. Usually, the device (for example, the communication node) may send data to a central server, the central server performs inference based on the data, and then the central server returns an inference result to the device. This process consumes a large quantity of communication resources for data transmission, and privacy of device data is at risk.

A scholar proposes a distributed inference technology of the deep neural network, to better reduce communication overheads and protect user data privacy. The model is distributed to the device, and local computational power of the device is used to infer the model, to reduce communication overheads and obtain data privacy preserving.

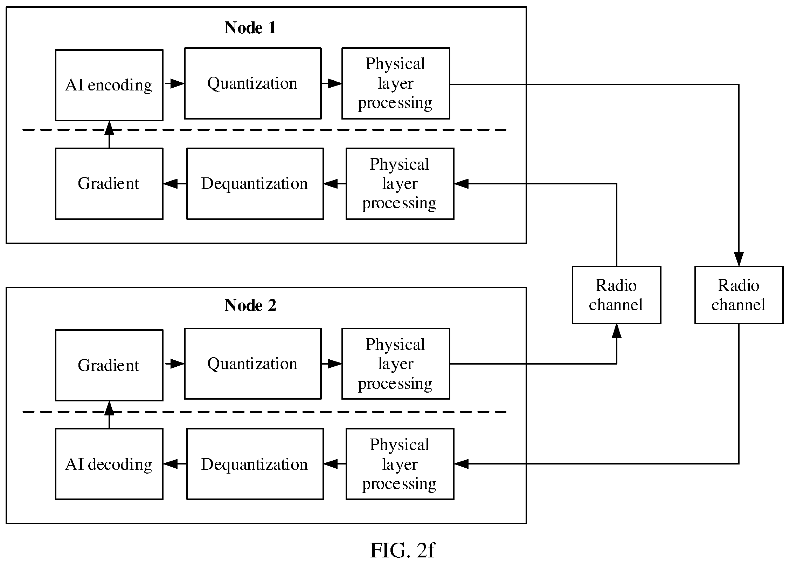

For example, in an example shown in FIG. 2f, two communication nodes, namely, a node 1 and a node 2, participate in the AI learning system. The node 1 and the node 2 each may be a communication node, for example, a terminal device or a network device. A neural network used in the AI learning system may include at least a neural sub-network that is deployed on the node 1 and that is used for AI encoding, and/or a neural sub-network that is deployed on the node 2 and that is used for AI decoding.

In an implementation example of FIG. 2f, after the node 1 performs processing based on the neural sub-network used for AI encoding to obtain an encoding result, a radio signal is obtained after quantization and physical layer processing are performed on the encoding result. Correspondingly, after the node 2 receives the radio signal through transmission on a radio channel, the node 2 performs physical layer processing and dequantization processing, and then uses a processing result as an input for AI decoding. The decoding result can be obtained through AI decoding processing. In addition, the node 2 may further determine gradient data based on the decoding result and label data.

Then, after the node 2 obtains the gradient data through neural sub-network processing based on AI decoding, quantization and physical layer processing are performed on the gradient data to obtain a radio signal. Correspondingly, after the node 1 receives the radio signal through transmission on a radio channel, the node 1 obtains the gradient data through physical layer processing and dequantization processing. Subsequently, the node 1 can perform, based on the gradient data, neural network optimization (for example, training/updating/iteration) on the neural sub-network that is deployed on the node 1 and that is used for AI encoding.

Optionally, after the node 2 obtains the gradient data, the node 2 can also perform, based on the gradient data, neural network optimization (for example, training/updating/iteration) on the neural sub-network that is deployed on the node 2 and that is used for AI encoding.

It should be noted that, the node 2 may further calculate a result of a loss function based on the decoding result and the label data, and the result of the loss function may also be used for neural network optimization. The foregoing implementation is described by using only an example in which the node 2 determines the gradient data.

In addition, in an optimization process of the neural network, the foregoing AI encoding process and the foregoing AI decoding process may need to be performed for a plurality of times. However, in a plurality of execution processes, the node 1 may perform AI encoding processing based on a plurality of pieces of input data and then perform sending, and the node 2 may process an AI decoding result based on a plurality of pieces of label data to obtain gradient data. In this case, the plurality of pieces of input data and the plurality of pieces of label data may be data in a same training dataset (refer to the foregoing implementation process of the supervised learning). However, for different nodes, in a process of one time of AI encoding and AI decoding, how to align indexes, in a same training dataset, of input data used for the time of AI encoding and label data used after AI decoding is an urgent technical problem to be resolved.

To resolve the foregoing problem, this application provides a communication method and a related device, so that computational power of a communication node can be applied to artificial intelligence (artificial intelligence, AI) processing of a neural network, and flexibility of neural network deployment can be improved. The following provides detailed descriptions with reference to the accompanying drawings.

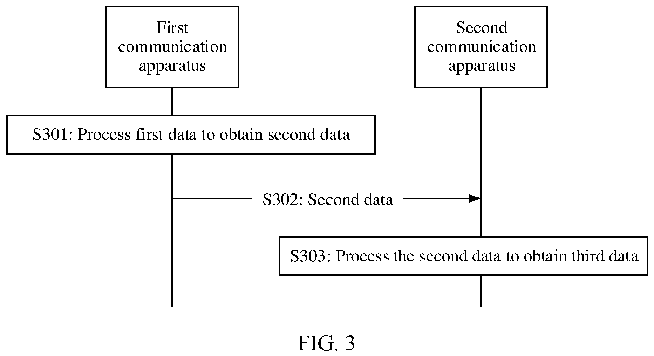

FIG. 3 is a diagram of an implementation of a communication method according to this application. The method includes the following steps.

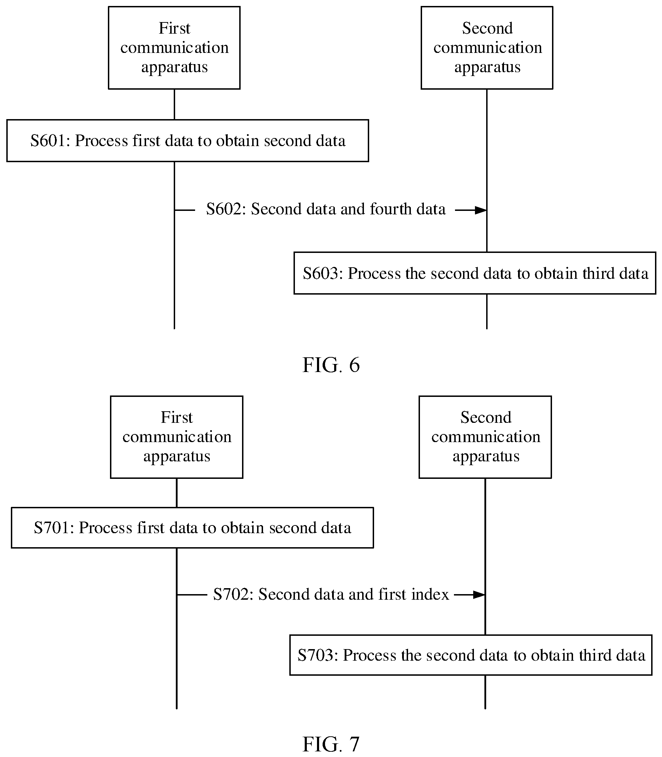

It should be noted that in FIG. 3, an example in which a first communication apparatus and a second communication apparatus are used as execution bodies of the interaction example is used to illustrate the method. However, the execution body of the interaction example is not limited in this application. For example, in FIG. 3 and FIG. 6 below, an execution body of the method may be replaced with a chip, a chip system, a processor, a logical module, software, or the like in the communication apparatus. The first communication apparatus may be a terminal device, and the second communication apparatus may be a network device. Alternatively, the first communication apparatus may be a network device, and the second communication apparatus may be a terminal device. Alternatively, both the first communication apparatus and the second communication apparatus are terminal devices (for example, the method may be applied to a communication process of different terminal devices in a sidelink communication scenario).

S301: The first communication apparatus performs first processing on first data to obtain second data. The first data is data in a first dataset.

S302: The first communication apparatus sends the second data, and correspondingly, the second communication apparatus receives the second data.

S303: The second communication apparatus determines third data based on the second data.

It should be understood that, in the foregoing technical solution, the second data is obtained by processing the first data based on a first neural network, and/or the third data is obtained by processing the second data based on a second neural network. Optionally, the first dataset and a second dataset may be included in one dataset. The one dataset may include N pieces of input data and M pieces of label data. Both N and M are positive integers. In addition, the first dataset may include the N pieces of input data, and the second dataset may include the M pieces of label data. In other words, the first dataset may be referred to as an input dataset, a neural network input dataset, or the like, and the second dataset may be referred to as a label dataset, a neural network label dataset, or the like. In addition, an AI neural network may be processed based on the same dataset, to implement iteration, updating, and the like of the AI neural network.

Optionally, when each of the N pieces of input data corresponds to different pieces of label data in the M pieces of label data, a value of N is equal to a value of M. When at least two of the N pieces of input data correspond to one piece of same label data in the M pieces of label data, a value of N may be greater than or equal to a value of M. When one of the N pieces of input data corresponds to at least two of the M pieces of label data, a value of N may be less than or equal to a value of M.

Optionally, when the second data is obtained by processing the first data in the first dataset based on the first neural network, because the second data is to-be-sent data obtained by the first communication apparatus by processing the first data, the first neural network may be referred to as a neural network deployed at a transmit end, an encoding neural network, an AI encoding neural network, or the like. Similarly, when the third data is obtained by processing the second data based on the second neural network, because the third data is data obtained by the second communication apparatus by processing the received second data based on the second neural network, the second neural network may be referred to as a neural network deployed at a receive end, a decoding neural network, an AI decoding neural network, or the like.

In this application, terms such as AI, neural network, AI neural network, machine learning, AI processing, and AI neural network processing may be replaced with each other.

In this application, related data (for example, the first data, the second data, the third data, and the fourth data) may be replaced with information, a signal, or the like.

In addition, in the foregoing technical solution, an index of the first data in the first dataset is used to determine fourth data in the second dataset, the second dataset includes label data corresponding to data in the first dataset, and the fourth data is label data corresponding to the first data. In other words, after the second communication apparatus determines the third data based on the second data in step S303, the second communication apparatus may determine corresponding gradient information and/or a corresponding result of a loss function based on the label data (namely, the fourth data) corresponding to the first data and the third data.

Optionally, in the method shown in FIG. 3, after step S303, the method further includes: The second communication apparatus sends, to the first communication apparatus, one or both of gradient information and a result of a loss function that are determined based on the third data and the fourth data. Specifically, a receiver (for example, the second communication apparatus) of the second data can perform processing based on the second data to obtain the third data, and the receiver can further determine and send the corresponding gradient information and/or the corresponding result of the loss function based on the third data and the fourth data. In this way, after receiving the gradient information and/or the result of the loss function, the first communication apparatus can update or iterate the first neural network based on the gradient information and/or the result of the loss function.

In addition, the index of the first data in the first dataset satisfies at least one of Manner A and Manner B.

Manner A: The index is determined based on a resource carrying the second data.

Specifically, when the index of the first data in the first dataset satisfies Manner A, a value of the index is determined based on at least one of a time domain resource index of the resource, a frequency domain resource index of the resource, and a resource block size of the resource. Therefore, when the index of the first data in the first dataset is determined based on the resource carrying the second data, the index may be specifically determined based on at least one of the foregoing items, to improve flexibility of implementing the solution.

Manner A may be understood as that a same index value is generated on two sides based on information that has been synchronized between a data receiver and a data sender, to implement alignment of understandings of the index. For example, it is assumed that a batch size of training is N_{batch} and a quantity of dataset samples is N_{dataset}. In a round of training, it is considered that N_{batch} pieces of sample data are used each time until the dataset samples are used up. The following provides some implementation examples by using an example in which the resource carrying the second data is a time domain resource index.

In an implementation example, the index value is generated based on a system frame number n_{f} in time domain resource indexes of the data receiver and the data sender. For example, an index value of data in a dataset satisfies: 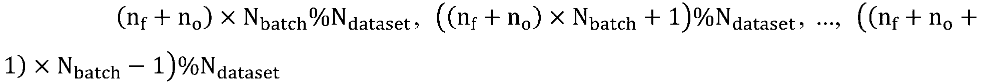 (nf + no) × Nbatch%Ndataset, ((nf + no) × Nbatch + 1)%Ndataset, ..., ((nf + no + 1) × Nbatch - 1)%Ndataset

Herein, % represents a modulo operation, n_{f} represents the system frame number, and nₒ is an offset value (used to traverse the dataset).

In another implementation example, an index value of data in a dataset may alternatively be related to a system frame number n_{f} and a subframe number n_{sf} in time domain resource indexes. For example, the index value of the data in the dataset satisfies: 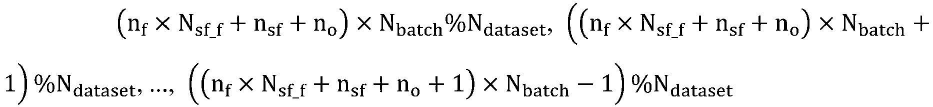 (nf × Nsf_f + nsf + no) × Nbatch%Ndataset, ((nf × Nsf_f + nsf + no) × Nbatch + 1) %Ndataset, ..., ((nf × Nsf_f + nsf + no + 1) × Nbatch - 1) %Ndataset

Herein, % represents a modulo operation, n_{f} represents the system frame number, N_{sf_f} represents a quantity of subframes included in each frame, n_{sf} represents the subframe number, and nₒ is an offset value (used to traverse the dataset).

In another implementation example, an index value of data in a dataset may alternatively be related to a system frame number n_{f} and a slot number nₛₗₒₜ in time domain resource indexes. For example, the index value of the data in the dataset satisfies: 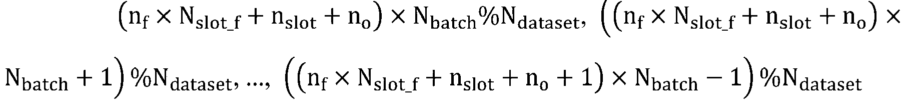 (nf × Nslot_f + nslot + no) × Nbatch%Ndataset, (nf × Nslot_f + nslot + no) × Nbatch + 1) %Ndataset, ..., ((nf × Nslot_f + nslot + no + 1) × Nbatch - 1) %Ndataset

Herein, % represents a modulo operation, n_{f} represents the system frame number, N_{slot_f} represents a quantity of slots included in each frame, n_{sf} represents the subframe number, and nₒ is an offset value (used to traverse the dataset).

It should be understood that, in the foregoing implementation example, only an example in which the resource carrying the second data is a time domain resource index is used. In the foregoing implementation example, the time domain resource index may be replaced with information that has been synchronized between the data receiver and the data sender. For example, a quantity of frequency domain physical resources carrying the second data includes but is not limited to a quantity of resource blocks or a quantity of subcarriers.

Optionally, Manner A may be understood as a real-time data alignment manner. "Real-time" herein may be understood as that a time interval between a process in which the first communication apparatus performs the first processing in step S301 and a process in which the second communication apparatus performs second processing in step S303 is relatively fixed; and/or a time interval between a process in which the first communication apparatus sends a processing result (namely, the second data) of the first processing and a process in which the second communication apparatus sends gradient data (and/or a result of a loss function) corresponding to the second processing is relatively fixed.

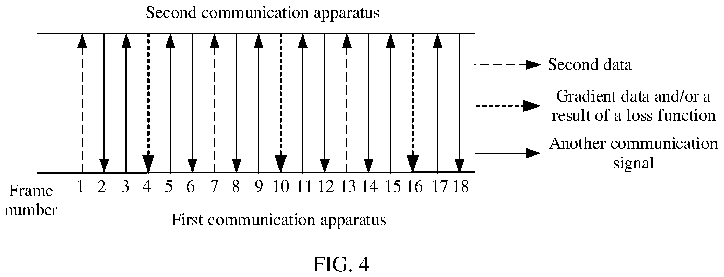

FIG. 4 shows an implementation example of Manner A (namely, the real-time data alignment manner). In this example, a 1^{st} frame (for example, a frame whose frame number is 1/7/13) in every six frames is used to transmit the second data sent by the first communication apparatus, and a 4^{th} frame (for example, a frame whose frame number is 4/10/16) in every six frames is used to transmit the gradient data (and/or the result of the loss function) sent by the second communication apparatus. In other words, a time interval between the time domain resource carrying the second data and a time domain resource carrying the gradient data (and/or the result of the loss function) may be preconfigured.

It may be understood that, in FIG. 4, in addition to the second data and the gradient data (and/or the result of the loss function), the first communication apparatus and the second communication apparatus may further exchange other data, for example, another communication signal shown in FIG. 4, for example, system information, a reference signal, and channel information obtained through measurement based on the reference signal.

Manner B: The index is determined based on a quantity of processing times of the data in the first dataset.

When the index of the first data in the first dataset satisfies Manner B, the method further includes: The first communication apparatus sends first information. The first information indicates the index of the first data in the first dataset.

Specifically, in Manner B, because the second communication apparatus may be unaware of the quantity of processing times of the data in the first dataset, the second communication apparatus may determine the index based on the quantity of processing times of the data in the second dataset. Correspondingly, the first communication apparatus may further send the first information, so that the second communication apparatus can determine the index of the first data in the first dataset based on the first information, and subsequently determine the fourth data in the second dataset based on the index.

It should be understood that, the first communication apparatus may perform a plurality of times of processing based on the data in the first dataset to obtain and send processing results (for example, one of the processing results is the second data obtained based on the first data). Correspondingly, in the plurality of processing results, the first communication apparatus may send a corresponding index for a part or all of the processing results (for example, send the first information for the processing result that is the second data). Then, sending the corresponding index based on the part or all of the processing results can implement alignment of understandings of the index by a data receiver and a data sender, to avoid a data processing error caused by misalignment of the understandings of the index by the data receiver and the data sender, thereby improving system robustness.

Optionally, the first communication apparatus may send, for a part of the processing results, an index corresponding to the part of the processing results, and does not need to send, for all processing results, indexes corresponding to all the processing results, thereby reducing overheads. In a possible implementation of Manner B, the first information is one of a plurality of pieces of information transmitted based on a first periodicity, and the method further includes: The first communication apparatus receives or sends configuration information. The configuration information is used to configure the first periodicity. Specifically, the first information may be one piece of periodic information transmitted based on the first periodicity. Before this, the first communication apparatus may receive or send the configuration information used to configure the first periodicity, so that the first communication apparatus not only can serve as a configuring party of the first periodicity, but also can serve as a configured party of the first periodicity. This can align understandings of the first periodicity by the data receiver and the data sender, and can also improve flexibility of implementing the solution.

For example, the first communication apparatus may set a sample index counter. The sample index counter is configured to: accumulate a quantity of times of performing first processing based on the data in the first dataset, and determine the index of the first data in the first dataset in step S301 based on an accumulated value. Correspondingly, the second communication apparatus may set a sample index counter. The sample index counter is configured to: accumulate a quantity of times of performing second processing based on the data in the second dataset, and after receiving the second data in step S302, determine, based on an accumulated value, an index, in the first dataset, of the first data used to generate the second data (or determine an index, in the second dataset, of the fourth data to be used after step S303).

In addition, the first communication apparatus may set a timer of the first periodicity. When the timer expires, the first communication apparatus may further send the first information in step S302 when sending the second data in step S302, so that the first communication apparatus and the second communication apparatus synchronize, based on the first information, indexes applicable to the first communication apparatus and the second communication apparatus, to prevent out-of-synchronization caused by misalignment between sample index counters.

For example, the configuration information may be carried in an RRC message. For example, the configuration information may be used to configure the first periodicity by using a data synchronization periodicity (DataSyncPeriod) information element in the RRC message.

Optionally, Manner B may be understood as a data synchronization manner in a non-real-time system. "Non-real-time" herein may be understood as that a time interval between a process in which the first communication apparatus performs the first processing in step S301 and a process in which the second communication apparatus performs second processing in step S303 is not relatively fixed; and/or a time interval between a process in which the first communication apparatus sends a processing result (namely, the second data) of the first processing and a process in which the second communication apparatus sends gradient data (and/or a result of a loss function) corresponding to the second processing is not relatively fixed.

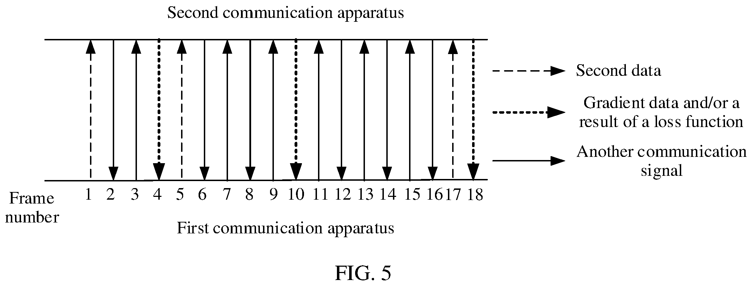

FIG. 5 shows an implementation example of Manner B (namely, a non-real-time data alignment manner). In this example, a plurality of AI tasks may be executed between the first communication apparatus and the second communication apparatus, and execution periodicities of different AI tasks or triggering of data receiving and sending of different AI tasks may be different. For example, sizes of input data of different AI tasks may be different. For another example, sizes of gradient data (and/or results of loss functions) of different AI tasks may be different.

In the example shown in FIG. 5, data related to an AI task may include second data transmitted in a frame with a frame number 1 and gradient data (and/or a result of the loss function) transmitted in a frame with a frame number 4. In other words, an interval between the two frames is two frames (namely, frames whose frame numbers are 2 and 3). Data related to another AI task may include second data transmitted in a frame with a frame number 5 and gradient data (and/or a result of the loss function) transmitted in a frame with a frame number 10. In other words, an interval between the two frames is four frames (namely, frames whose frame numbers are 6, 7, 8, and 9). Data related to another AI task may include second data transmitted in a frame with a frame number 17 and gradient data (and/or a result of the loss function) transmitted in a frame with a frame number 18. In other words, an interval between the two frames is 0 frames (namely, the two frames are two adjacent frames).

Manner C: The index is determined based on a resource carrying the second data and a quantity of processing times of the data in the first dataset.

When the index of the first data in the first dataset satisfies Manner A and Manner B, the index may be determined based on the resource carrying the second data (for example, at least one of a time domain resource index, a frequency domain resource index, and a resource block size of the resource) and the quantity of processing times of the data in the first dataset.

For example, the value of the index may be a mathematical operation result (for example, a sum of two values, a difference between two values, or a product of two values) of a value of the time domain resource index of the resource and a value of the quantity of processing times. For another example, the value of the index may be a mathematical operation result (for example, a sum of two values, a difference between two values, or a product of two values) of a value of the resource block size of the resource and a value of the quantity of processing times.

In a possible implementation, the method shown in FIG. 3 further includes: The first communication apparatus receives or sends indication information indicating that the index satisfies the at least one item (that is, the indication information indicates Manner A and/or Manner B, or the indication information indicates Manner A, Manner B, or Manner C). Specifically, the first communication apparatus may further receive or send the indication information indicating that the index satisfies the at least one item, so that the data receiver and the data sender can implement alignment of understandings of indexes of data in a dataset based on the indication information, to avoid a data processing error caused by misalignment of the understandings of the index by the data receiver and the data sender, thereby improving system robustness.

In a possible implementation, the method shown in FIG. 3 further includes: The first communication apparatus receives indication information indicating the first dataset; and/or the first communication apparatus sends indication information indicating the second dataset. Specifically, the first communication apparatus may serve as a configured party of the first dataset, and/or the first communication apparatus may serve as a configuring party of the second dataset, so that the data receiver and the data sender can obtain a dataset before exchanging data.

Optionally, the first dataset may be preconfigured in the first communication apparatus, and/or the second dataset may be preconfigured in the second communication apparatus. In this manner, overheads can be reduced.

Based on the technical solution shown in FIG. 3, the second data sent by the first communication apparatus in step S301 is obtained based on the first data. Subsequently, the second communication apparatus may process the second data in step S302 to obtain the third data. The index of the first data in the first dataset is used to determine the fourth data in the second dataset, and the fourth data is the label data corresponding to the first data. In other words, after the receiver of the second data receives the second data in step S302, and determines the third data in step S303, the second communication apparatus can determine the label data in the second dataset, and process the third data based on the label data. In addition, one or both of the second data and the third data are obtained based on a neural network. In other words, a neural network used for AI processing may include a neural network deployed in the first communication apparatus and/or a neural network deployed in the second communication apparatus. Therefore, when a communication apparatus in a communication system serves as an AI participating node, computational power of the communication apparatus can be applied to AI processing of a neural network, and flexibility of neural network deployment can be improved.

In addition, the index of the first data in the first dataset is used to determine, in the second dataset, the label data (namely, the fourth data) corresponding to the first data, and the index satisfies at least one of the foregoing items. In other words, after receiving the second data, the second communication apparatus can determine the label data in the second dataset based on a resource carrying data or a quantity of processing times of data in a dataset. In this manner, air interface overheads can be reduced, to improve communication efficiency.

FIG. 6 is a diagram of an implementation of a communication method according to this application. The method includes the following steps.

S601: A first communication apparatus performs first processing on first data to obtain second data. The first data is data in a first dataset.

S602: The first communication apparatus sends second data and fourth data, and correspondingly, a second communication apparatus receives the second data and the fourth data.

S603: The second communication apparatus determines third data based on the second data.

In a possible implementation, the method shown in FIG. 6 further includes: The first communication apparatus receives one or both of gradient information and a result of a loss function that are determined based on the third data and the fourth data. Specifically, a receiver (for example, the second communication apparatus) of the second data can perform processing based on the second data to obtain the third data, and the receiver can further determine and send the corresponding gradient information and/or the corresponding result of the loss function based on the third data and the fourth data. In this way, after receiving the gradient information and/or the result of the loss function, the first communication apparatus can update or iterate the first neural network based on the gradient information and/or the result of the loss function.

It should be noted that, in the technical solution shown in FIG. 6, for implementation processes (for example, the first data to the fourth data, the first processing, and the second data) of the first communication apparatus and the second communication apparatus, refer to FIG. 3 and related implementations.

Based on the technical solution shown in FIG. 6, the second data sent by the first communication apparatus in step S602 is obtained based on the first data. Subsequently, the second communication apparatus may process the second data in step S603 to obtain the third data. The first communication apparatus may further send the fourth data in step S602. The fourth data is label data corresponding to the first data. Correspondingly, after receiving the fourth data in step S602, the second communication apparatus can process the third data based on the fourth data (namely, the label data corresponding to the first data). In addition, one or both of the second data and the third data are obtained based on a neural network. In other words, a neural network used for AI processing may include a neural network deployed in the first communication apparatus and/or a neural network deployed in the second communication apparatus. Therefore, when a communication apparatus in a communication system serves as an AI participating node, computational power of the communication apparatus can be applied to AI processing of a neural network, and flexibility of neural network deployment can be improved.

In addition, the second data sent by the first communication apparatus is a processing result of the first data, and the fourth data sent by the first communication apparatus is the label data corresponding to the first data. Therefore, the processing result of the first data and the label data corresponding to the first data are sent, so that the receiver can perform further processing based on the label data, and the solution can also be applied to a scenario in which a data volume of the label data is small, to reduce transmission overheads of the label data as much as possible.

It should be understood that in the implementation process shown in FIG. 3, the first communication apparatus may obtain the first dataset through configuration or preconfiguration, and the second communication apparatus may obtain a second dataset through configuration or preconfiguration. In addition, both the first communication apparatus and the second communication apparatus need to implement index alignment based on a resource carrying the second data or a quantity of processing times of data in a dataset. However, in the technical solution shown in FIG. 6, a difference lies in that the first dataset and the second dataset may be deployed in the first communication apparatus, and no dataset may be deployed in the second communication apparatus, and an index of a dataset is maintained only on the first communication apparatus side. An advantage is that a synchronized index value does not need to be maintained on both sides, thereby reducing overheads and implementation complexity of the second communication apparatus.

Optionally, in the technical solution shown in FIG. 6, because the fourth data transmitted in step S602 is the label data, the technical solution shown in FIG. 6 is applicable to a scenario in which a data scale of the label data is small.

FIG. 7 is a diagram of an implementation of a communication method according to this application. The method includes the following steps.

S701: A first communication apparatus performs first processing on first data to obtain second data. The first data is data in a first dataset.

S702: The first communication apparatus sends the second data and a first index, and correspondingly, a second communication apparatus receives the second data and the first index.

S703: The second communication apparatus determines third data based on the second data.

It should be understood that, in the foregoing technical solution, the second data is obtained by processing the first data based on a first neural network, and/or the third data is obtained by processing the second data based on a second neural network. The first dataset and the second dataset may be included in one dataset. The one dataset may include N pieces of input data and M pieces of label data. Both N and M are positive integers. In addition, the first dataset may include the N pieces of input data, and the second dataset may include the M pieces of label data. In other words, the first dataset may be referred to as an input dataset, a neural network input dataset, or the like, and the second dataset may be referred to as a label dataset, a neural network label dataset, or the like. In addition, an AI neural network may be processed based on the same dataset, to implement iteration, updating, and the like of the AI neural network.

In a possible implementation, the first index is determined based on a second index of the first data in the first dataset.

In an implementation example, when each of the N pieces of input data corresponds to different pieces of label data in the M pieces of label data, a value of N is equal to a value of M.

For example, the first index may be the same as the second index of the first data in the first dataset. In other words, label data of an i^{th} piece of input data in the first dataset is a j^{th} piece of data in the second dataset, i is the first index, j is the second index, and i is equal to j. To be specific, label data of a 1^{st} piece of data in the N pieces of input data is a 1^{st} piece of data in the M pieces of label data, label data of a 2^{nd} piece of data in the N pieces of input data is a 2^{nd} piece of data in the M pieces of label data, and by analogy, label data of an N^{th} piece of data in the N pieces of input data is an M^{th} piece of data in the M pieces of label data (N is equal to M).

For another example, the first index may be partially different from or completely different from the second index of the first data in the first dataset. In other words, label data of an i^{th} piece of input data in the first dataset is a j^{th} piece of data in the second dataset, i is the first index, j is the second index, and i and j may be partially or completely unequal. A mapping relationship between i and j may be preconfigured.

The mapping relationship between i and j may be an example of a preconfiguration. i may be traversed from 1 to N, and j may be traversed from N (N is equal to M) to 1. For example, a value of N and a value of M are both 3. Label data of a 1^{st} piece of data in the N pieces of input data is a 3^{rd} piece of data in the M pieces of label data, label data of a 2^{nd} piece of data in the N pieces of input data is a 2^{nd} piece of data in the M pieces of label data, and label data of a 3^{rd} piece of data in the N pieces of input data is a 1^{st} piece of data in the M pieces of label data. In this example, the first index may be partially different from the second index of the first data in the first dataset.

The mapping relationship between i and j may be another example of a preconfiguration, and the mapping relationship between i and j may be configured or preconfigured, so that a data receiver and a data sender are aligned. For example, a value of N and a value of M are still both 3. Label data of a 1^{st} piece of data in the N pieces of input data is a 3^{rd} piece of data in the M pieces of label data, label data of a 2^{nd} piece of data in the N pieces of input data is a 1^{st} piece of data in the M pieces of label data, and label data of a 3^{rd} piece of data in the N pieces of input data is a 2^{nd} piece of data in the M pieces of label data. In this example, the first index may be completely different from the second index of the first data in the first dataset.

In another implementation example, a mapping relationship between the first index and the second index of the first data in the first dataset is preconfigured.

For example, when at least two of the N pieces of input data correspond to one piece of same label data in the M pieces of label data, a value of N may be greater than or equal to a value of M. Correspondingly, in this case, the first index may be less than or equal to the second index of the first data in the first dataset.

For another example, when one of the N pieces of input data corresponds to at least two of the M pieces of label data, a value of N may be less than or equal to a value of M. Correspondingly, in this case, the first index may be greater than or equal to the second index of the first data in the first dataset.

In a possible implementation, the method shown in FIG. 7 further includes: The first communication apparatus receives one or both of gradient information and a result of a loss function that are determined based on the third data and the fourth data. Specifically, a receiver (for example, the second communication apparatus) of the second data can perform processing based on the second data to obtain the third data, and the receiver can further determine and send the corresponding gradient information and/or the corresponding result of the loss function based on the third data and the fourth data. In this way, after receiving the gradient information and/or the result of the loss function, the first communication apparatus can update or iterate the first neural network based on the gradient information and/or the result of the loss function.

Based on the technical solution shown in FIG. 7, the second data sent by the first communication apparatus in step S702 is obtained based on the first data. Subsequently, the second communication apparatus may process the second data in step S703 to obtain the third data. The first communication apparatus may further send the first index. Correspondingly, after receiving the second data, the receiver of the second data and the fourth data can process the third data based on the label data. In addition, one or both of the second data and the third data are obtained based on a neural network. In other words, a neural network used for AI processing may include a neural network deployed in the first communication apparatus and/or a neural network deployed in the second communication apparatus. Therefore, when a communication apparatus in a communication system serves as an AI participating node, computational power of the communication apparatus can be applied to AI processing of a neural network, and flexibility of neural network deployment can be improved.

In addition, the second data sent by the first communication apparatus is a processing result of the first data, and the fourth data sent by the first communication apparatus is the label data corresponding to the first data. Therefore, the processing result of the first data and the label data corresponding to the first data are sent, so that the receiver can perform further processing based on the label data, and the solution can also be applied to a scenario in which a data volume of the label data is small, to reduce transmission overheads of the label data as much as possible.

It should be understood that in the implementation process shown in FIG. 3, the first communication apparatus may obtain the first dataset through configuration or preconfiguration, and the second communication apparatus may obtain a second dataset through configuration or preconfiguration. In addition, both the first communication apparatus and the second communication apparatus need to implement index alignment based on a resource carrying the second data or a quantity of processing times of data in a dataset. However, in the technical solution shown in FIG. 7, a difference lies in that the first communication apparatus and the second communication apparatus may not need to set a sample index counter used for synchronization. In this way, implementation complexity can be reduced.

Optionally, in the technical solution shown in FIG. 7, because the data transmitted in step S702 includes the second index, the technical solution shown in FIG. 7 may be applied to a scenario in which a scale of a dataset is small (or a quantity of indexes in the dataset is small).

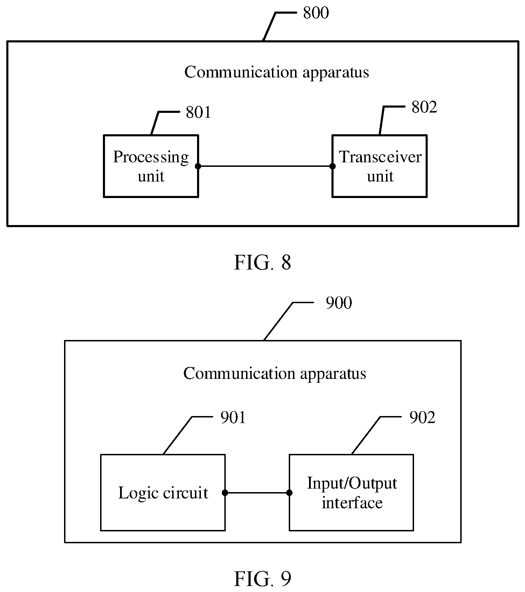

As shown in FIG. 8, an embodiment of this application provides a communication apparatus 800. The communication apparatus 800 can implement the functions of the second communication apparatus or the first communication apparatus in the foregoing method embodiments, and therefore can further implement beneficial effects of the foregoing method embodiments. In this embodiment of this application, the communication apparatus 800 may be the first communication apparatus (or the second communication apparatus), or may be an integrated circuit, an element, or the like in the first communication apparatus (or the second communication apparatus), for example, a chip.

It should be noted that a transceiver unit 802 may include a sending unit and a receiving unit, which are respectively configured to perform sending and receiving.

In a possible implementation, when the apparatus 800 is configured to perform the method performed by the first communication apparatus in the foregoing embodiments, the apparatus 800 includes a processing unit 801 and the transceiver unit 802. The processing unit 801 is configured to process first data to obtain second data. The first data is data in a first dataset. The transceiver unit 802 is configured to send the second data. The second data is used to determine third data, an index of the first data in the first dataset is used to determine fourth data in a second dataset, the second dataset includes label data corresponding to data in the first dataset, the fourth data is label data corresponding to the first data, and the second data is obtained by processing the first data based on a first neural network, and/or the third data is obtained by processing the second data based on a second neural network. The index satisfies at least one of the following items: the index is determined based on a resource carrying the second data; and the index is determined based on a quantity of processing times of the data in the first dataset.

In a possible implementation, when the apparatus 800 is configured to perform the method performed by the second communication apparatus in the foregoing embodiments, the apparatus 800 includes a processing unit 801 and the transceiver unit 802. The transceiver unit 802 is configured to receive second data. The second data is obtained by processing based on first data, the first data is data in a first dataset, an index of the first data in the first dataset is used to determine fourth data in a second dataset, the second dataset includes label data corresponding to data in the first dataset, and the fourth data is label data corresponding to the first data. The processing unit 801 is configured to determine third data based on the second data. The second data is obtained by processing the first data based on a first neural network, and/or the third data is obtained by processing the second data based on a second neural network. The index satisfies at least one of the following items: the index is determined based on a resource carrying the second data, and the index is determined based on a quantity of processing times of the data in the second dataset.

In a possible implementation, when the apparatus 800 is configured to perform the method performed by the first communication apparatus in the foregoing embodiments, the apparatus 800 includes a processing unit 801 and the transceiver unit 802. The processing unit 801 is configured to process first data to obtain second data. The transceiver unit 802 is configured to send the second data and fourth data. The second data is used to determine third data, the fourth data is label data corresponding to the first data, and the second data is obtained by processing the first data based on a first neural network, and/or the third data is obtained by processing the second data based on a second neural network.

In a possible implementation, when the apparatus 800 is configured to perform the method performed by the second communication apparatus in the foregoing embodiments, the apparatus 800 includes a processing unit 801 and the transceiver unit 802. The transceiver unit 802 is configured to receive second data and fourth data. The second data is obtained based on first data, and the fourth data is label data corresponding to the first data. The processing unit 801 is configured to determine third data based on the second data. The second data is obtained by processing the first data based on a first neural network, and/or the third data is obtained by processing the second data based on a second neural network.

In a possible implementation, when the apparatus 800 is configured to perform the method performed by the first communication apparatus in the foregoing embodiments, the apparatus 800 includes a processing unit 801 and the transceiver unit 802. The processing unit 801 is configured to process first data to obtain second data. The first data is data in a first dataset. The transceiver unit 802 is configured to send the second data and a first index. The second data is used to determine third data, the first index is used to determine fourth data in a second dataset, the second dataset includes label data corresponding to data in the first dataset, the fourth data is label data corresponding to the first data, and the second data is obtained by processing the first data based on a first neural network, and/or the fourth data is obtained by processing the second data based on a neural network.

In a possible implementation, when the apparatus 800 is configured to perform the method performed by the second communication apparatus in the foregoing embodiments, the apparatus 800 includes a processing unit 801 and the transceiver unit 802. The transceiver unit 802 is configured to receive second data and a first index. The second data is obtained based on first data, the first data is data in a first dataset, the first index is used to determine fourth data in a second dataset, the second dataset includes label data corresponding to data in the first dataset, and the fourth data is label data corresponding to the first data. The processing unit 801 is configured to determine third data based on the second data. The second data is obtained by processing the first data based on a first neural network, and/or the third data is obtained by processing the second data based on a second neural network.

It should be noted that, for details about content such as information execution processes of the units of the communication apparatus 800, refer to the descriptions in the foregoing method embodiments of this application. Details are not described herein again.

FIG. 9 is a diagram of another structure of a communication apparatus 900 according to this application. The communication apparatus 900 includes a logic circuit 901 and an input/output interface 902. The communication apparatus 900 may be a chip or an integrated circuit.

The transceiver unit 802 shown in FIG. 8 may be a communication interface. The communication interface may be the input/output interface 902 in FIG. 9, and the input/output interface 902 may include an input interface and an output interface. Alternatively, the communication interface may be a transceiver circuit, and the transceiver circuit may include an input interface circuit and an output interface circuit.

Optionally, the logic circuit 901 is configured to process first data to obtain second data. The first data is data in a first dataset. The input/output interface 902 is configured to send the second data. The second data is used to determine third data, an index of the first data in the first dataset is used to determine fourth data in a second dataset, the second dataset includes label data corresponding to data in the first dataset, the fourth data is label data corresponding to the first data, and the second data is obtained by processing the first data based on a first neural network, and/or the third data is obtained by processing the second data based on a second neural network. The index satisfies at least one of the following items: the index is determined based on a resource carrying the second data; and the index is determined based on a quantity of processing times of the data in the first dataset.

Optionally, the input/output interface 902 is configured to receive second data. The second data is obtained by processing based on first data, the first data is data in a first dataset, an index of the first data in the first dataset is used to determine fourth data in a second dataset, the second dataset includes label data corresponding to data in the first dataset, and the fourth data is label data corresponding to the first data. The logic circuit 901 is configured to determine third data based on the second data. The second data is obtained by processing the first data based on a first neural network, and/or the third data is obtained by processing the second data based on a second neural network. The index satisfies at least one of the following items: the index is determined based on a resource carrying the second data, and the index is determined based on a quantity of processing times of the data in the second dataset.

Optionally, the logic circuit 901 is configured to process first data to obtain second data. The input/output interface 902 is configured to send the second data and fourth data. The second data is used to determine third data, the fourth data is label data corresponding to the first data, and the second data is obtained by processing the first data based on a first neural network, and/or the third data is obtained by processing the second data based on a second neural network.

Optionally, the input/output interface 902 is configured to receive second data and fourth data. The second data is obtained based on first data, and the fourth data is label data corresponding to the first data. The logic circuit 901 is configured to determine third data based on the second data. The second data is obtained by processing the first data based on a first neural network, and/or the third data is obtained by processing the second data based on a second neural network.

Optionally, the logic circuit 901 is configured to process first data to obtain second data. The first data is data in a first dataset. The input/output interface 902 is configured to send the second data and a first index. The second data is used to determine third data, the first index is used to determine fourth data in a second dataset, the second dataset includes label data corresponding to data in the first dataset, the fourth data is label data corresponding to the first data, and the second data is obtained by processing the first data based on a first neural network, and/or the fourth data is obtained by processing the second data based on a neural network.

Optionally, the input/output interface 902 is configured to receive second data and a first index. The second data is obtained based on first data, the first data is data in a first dataset, the first index is used to determine fourth data in a second dataset, the second dataset includes label data corresponding to data in the first dataset, and the fourth data is label data corresponding to the first data. The logic circuit 901 is configured to determine third data based on the second data. The second data is obtained by processing the first data based on a first neural network, and/or the third data is obtained by processing the second data based on a second neural network.

The logic circuit 901 and the input/output interface 902 may further perform another step performed by the first communication apparatus or the second communication apparatus in any embodiment, and implement corresponding beneficial effects. Details are not described herein again.

In a possible implementation, the processing unit 801 shown in FIG. 8 may be the logic circuit 901 in FIG. 9.

Optionally, the logic circuit 901 may be a processing apparatus. A part or all of functions of the processing apparatus may be implemented by using software. Some or all functions of the processing apparatus may be implemented through software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field programmable gate arrays (field programmable gate array, FPGA), an application-specific integrated chip (application-specific integrated circuit, ASIC), a system-on-a-chip (system-on-a-chip, SoC), a central processing unit (central processing unit, CPU), a network processor (network processor, NP), a digital signal processing circuit (digital signal processor, DSP), a microcontroller (microcontroller unit, MCU), a programmable controller (programmable logic device, PLD), or another integrated chip, or any combination of the foregoing chips or processors.

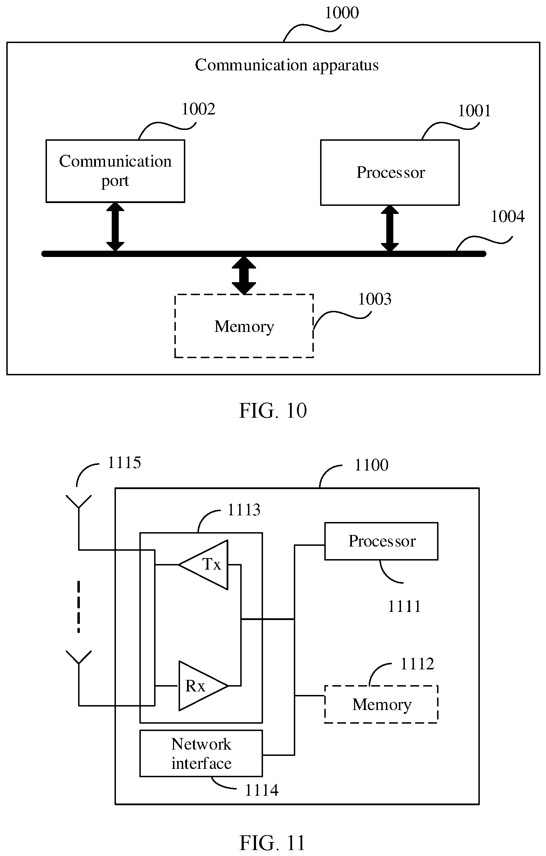

FIG. 10 shows a communication apparatus 100 in the foregoing embodiments according to an embodiment of this application. The communication apparatus 1000 may be specifically a communication apparatus serving as a terminal device in the foregoing embodiments. In the example shown in FIG. 10, the terminal device is implemented by using a terminal device (or a component in the terminal device).

In a diagram of a possible logical structure of the communication apparatus 1000, the communication apparatus 1000 may include but is not limited to at least one processor 1001 and a communication port 1002.

The transceiver unit 802 shown in FIG. 8 may be a communication interface. The communication interface may be the communication port 1002 in FIG. 10. The communication port 1002 may include an input interface and an output interface. Alternatively, the communication port 1002 may be a transceiver circuit, and the transceiver circuit may include an input interface circuit and an output interface circuit.

Further optionally, the apparatus may include at least one of a memory 1003 and a bus 1004. In this embodiment of this application, the at least one processor 1001 is configured to control an action of the communication apparatus 1000.

In addition, the processor 1001 may be a central processing unit, a general-purpose processor, a digital signal processor, an application-specific integrated circuit, a field programmable gate array or another programmable logic device, a transistor logic device, a hardware component, or any combination thereof. The processor 1001 may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the communication apparatus 1000 shown in FIG. 10 may be specifically configured to implement the steps implemented by the terminal device in the foregoing method embodiments, and achieve the technical effects corresponding to the terminal device. For a specific implementation of the communication apparatus shown in FIG. 10, refer to the descriptions in the foregoing method embodiments. Details are not described herein again.

FIG. 11 is a diagram of a structure of a communication apparatus 1100 in the foregoing embodiment according to an embodiment of this application. The communication apparatus 1100 may be specifically the communication apparatus serving as the network device in the foregoing embodiment. In the example shown in FIG. 11, the network device is implemented as a network device (or a component in a network device). For a structure of the communication apparatus, refer to the structure shown in FIG. 11.

The communication apparatus 1100 includes at least one processor 1111 and at least one network interface 1114. Further optionally, the communication apparatus includes at least one memory 1112, at least one transceiver 1113, and one or more antennas 1115. The processor 1111, the memory 1112, the transceiver 1113, and the network interface 1114 are connected, for example, connected through a bus. In this embodiment of this application, the connection may include various interfaces, transmission lines, buses, or the like. This is not limited in this embodiment. The antenna 1115 is connected to the transceiver 1113. The network interface 1114 is configured to enable the communication apparatus to communicate with another communication device through a communication link. For example, the network interface 1114 may include a network interface between the communication apparatus and a core network device, for example, an S1 interface. The network interface may include a network interface between the communication apparatus and another communication apparatus (for example, another network device or core network device), for example, an X2 or Xn interface.

The transceiver unit 802 shown in FIG. 8 may be a communication interface. The communication interface may be the network interface 1114 in FIG. 11. The network interface 1114 may include an input interface and an output interface. Alternatively, the network interface 1114 may be a transceiver circuit, and the transceiver circuit may include an input interface circuit and an output interface circuit.

The processor 1111 is mainly configured to: process a communication protocol and communication data; and control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control an entire terminal device, execute the software program, and process the data of the software program. Functions of the baseband processor and the central processing unit may be integrated into the processor 1111 in FIG. 11. A person skilled in the art can understand that the baseband processor and the central processing unit may alternatively be processors independent of each other, and are interconnected through a technology like a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1112 may exist independently, and is connected to the processor 1111. Optionally, the memory 1112 and the processor 1111 may be integrated together, for example, integrated into one chip. The memory 1112 can store program code for performing the technical solutions in embodiments of this application, and execution of the program code is controlled by the processor 1111. Various types of executed computer program code may also be considered as a driver of the processor 1111.

FIG. 11 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1113 may be configured to support receiving or sending of a radio frequency signal between the communication apparatus and a terminal. The transceiver 1113 may be connected to the antenna 1115. The transceiver 1113 includes a transmitter Tx and a receiver Rx. Specifically, the one or more antennas 1115 may receive a radio frequency signal. The receiver Rx of the transceiver 1113 is configured to receive the radio frequency signal from the antenna, convert the radio frequency signal into a digital baseband signal or a digital intermediate frequency signal, and provide the digital baseband signal or the digital intermediate frequency signal for the processor 1111, so that the processor 1111 further processes the digital baseband signal or the digital intermediate frequency signal, for example, performs demodulation and decoding. In addition, the transmitter Tx of the transceiver 1113 is further configured to receive a modulated digital baseband signal or digital intermediate frequency signal from the processor 1111, convert the modulated digital baseband signal or digital intermediate frequency signal into a radio frequency signal, and send the radio frequency signal through the one or more antennas 1115. Specifically, the receiver Rx may selectively perform one-level or multi-level down frequency mixing and analog-to-digital conversion on the radio frequency signal to obtain the digital baseband signal or the digital intermediate frequency signal. An order of the down frequency mixing and the analog-to-digital conversion is adjustable. The transmitter Tx may selectively perform one-level or multi-level up frequency mixing and digital-to-analog conversion on the modulated digital baseband signal or digital intermediate frequency signal to obtain the radio frequency signal. An order of the up frequency mixing and the digital-to-analog conversion is adjustable. The digital baseband signal and the digital intermediate frequency signal may be collectively referred to as a digital signal.

The transceiver 1113 may also be referred to as a transceiver unit, a transceiver device, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. That is, the transceiver unit includes the receiving unit and the sending unit. The receiving unit may also be referred to as a receiver, an input interface, a receiver circuit, or the like. The sending unit may be referred to as a transmitting device, a transmitter, a transmitter circuit, or the like.

It should be noted that, the communication apparatus 1100 shown in FIG. 11 may be specifically configured to implement steps implemented by the network device in the foregoing method embodiments, and achieve technical effects corresponding to the network device. For a specific implementation of the communication apparatus 1100 shown in FIG. 11, refer to the descriptions in the foregoing method embodiments. Details are not described herein again.

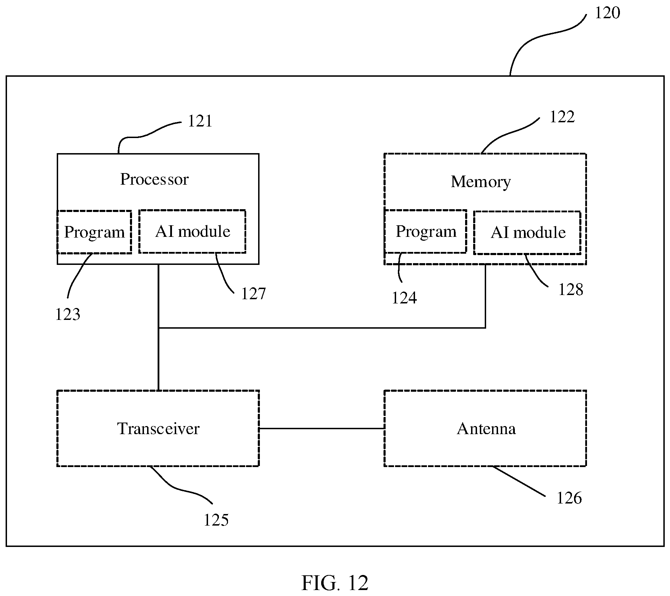

FIG. 12 is a diagram of a structure of a communication apparatus in the foregoing embodiment according to an embodiment of this application.

It may be understood that a communication apparatus 120 includes, for example, modules, units, elements, circuits, or interfaces, which are appropriately configured together to perform the technical solutions provided in this application. The communication apparatus 120 may be the terminal device or the network device described above, or may be a component (for example, a chip) in these devices, to implement the method described in the following method embodiments. The communication apparatus 120 includes one or more processors 121. The processor 121 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, the RAN node, the terminal, or the chip), execute a software program, and process data of the software program.

Optionally, in a design, the processor 121 may include a program 123 (which may also be referred to as code or instructions sometimes). The program 123 may be run on the processor 121, so that the communication apparatus 120 performs the method described in the following embodiments. In another possible design, the communication apparatus 120 includes a circuit (not shown in FIG. 12).

Optionally, the communication apparatus 120 may include one or more memories 122 storing a program 124 (which may also be referred to as code or instructions sometimes). The program 124 may be run on the processor 121, so that the communication apparatus 120 performs the method described in the foregoing method embodiments.

Optionally, the processor 121 and/or the memory 122 may include AI modules 127 and 128, and the AI module is configured to implement an AI-related function. The AI module may be implemented by using software, hardware, or a combination of software and hardware. For example, the AI module may include a radio intelligence control (radio intelligence control, RIC) module. For example, the AI module may be a near-real-time RIC or a non-real-time RIC.

Optionally, the processor 121 and/or the memory 122 may further store data. The processor and the memory may be separately disposed, or may be integrated together.

Optionally, the communication apparatus 120 may further include a transceiver 125 and/or an antenna 126. The processor 121 may also be referred to as a processing unit sometimes, and controls the communication apparatus (for example, the RAN node or the terminal). The transceiver 125 may also be referred to as a transceiver unit, a transceiver machine, a transceiver circuit, a transceiver, or the like sometimes, and is configured to implement a transceiver function of the communication apparatus through the antenna 126.

The transceiver unit 802 shown in FIG. 8 may be a communication interface. The communication interface may be the transceiver 125 in FIG. 12. The transceiver 125 may include an input interface and an output interface. Alternatively, the transceiver 125 may be a transceiver circuit, and the transceiver circuit may include an input interface circuit and an output interface circuit.

An embodiment of this application further provides a computer-readable storage medium. The storage medium is configured to store one or more computer-executable instructions. When the computer-executable instructions are executed by a processor, the processor performs the method in the possible implementations of the first communication apparatus or the second communication apparatus in the foregoing embodiments.

An embodiment of this application further provides a computer program product (also referred to as a computer program). When the computer program product is executed by a processor, the processor performs the method according to the possible implementations of the first communication apparatus or the second communication apparatus.

An embodiment of this application further provides a chip system. The chip system includes at least one processor, configured to support a communication apparatus in implementing the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the first communication apparatus or the second communication apparatus in the foregoing method embodiments.

An embodiment of this application further provides a communication system. An architecture of the network system includes the first communication apparatus and the second communication apparatus in any one of the foregoing embodiments.

In the several embodiments provided in this application, it should be understood that the disclosed system, apparatus, and method may be implemented in other manners. For example, the described apparatus embodiment is merely an example. For example, division into the units is merely logical functional division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part making a contribution, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, comprising:
processing first data to obtain second data, wherein the first data is data in a first dataset; and
sending the second data, wherein the second data is used to determine third data, an index of the first data in the first dataset is used to determine fourth data in a second dataset, the second dataset comprises label data corresponding to data in the first dataset, the fourth data is label data corresponding to the first data, and the second data is obtained by processing the first data based on a first neural network, and/or the third data is obtained by processing the second data based on a second neural network, wherein
the index satisfies at least one of the following items:
the index is determined based on a resource carrying the second data; and
the index is determined based on a quantity of processing times of the data in the first dataset.

2. The method according to claim 1, wherein that the index is determined based on the resource carrying the second data comprises:
a value of the index is determined based on at least one of a time domain resource index of the resource, a frequency domain resource index of the resource, and a resource block size of the resource.

3. The method according to claim 1 or 2, wherein the index is determined based on the quantity of processing times of the data in the first dataset, and the method further comprises:
sending first information, wherein the first information indicates the index of the first data in the first dataset.

4. The method according to claim 3, wherein the first information is one of a plurality of pieces of information transmitted based on a first periodicity, and the method further comprises:
receiving or sending configuration information, wherein the configuration information is used to configure the first periodicity.

5. The method according to any one of claims 1 to 4, wherein the method further comprises:
receiving indication information indicating the first dataset; and/or
sending indication information indicating the second dataset.

6. The method according to any one of claims 1 to 5, wherein the method further comprises:
receiving one or both of gradient information and a result of a loss function that are determined based on the third data and the fourth data.

7. The method according to any one of claims 1 to 6, wherein the method further comprises:
receiving or sending indication information indicating that the index satisfies the at least one item.

8. A communication method, comprising:
receiving second data, wherein the second data is obtained by processing based on first data, the first data is data in a first dataset, an index of the first data in the first dataset is used to determine fourth data in a second dataset, the second dataset comprises label data corresponding to data in the first dataset, and the fourth data is label data corresponding to the first data; and
determining third data based on the second data, wherein the second data is obtained by processing the first data based on a first neural network, and/or the third data is obtained by processing the second data based on a second neural network, wherein
the index satisfies at least one of the following items:
the index is determined based on a resource carrying the second data; and
the index is determined based on a quantity of processing times of the data in the second dataset.

9. The method according to claim 8, wherein that the index is determined based on the resource carrying the second data comprises:
a value of the index is determined based on at least one of a time domain resource index of the resource, a frequency domain resource index of the resource, and a resource block size of the resource.

10. The method according to claim 8 or 9, wherein the index is determined based on the quantity of processing times of the data in the second dataset, and the method further comprises:
sending first information, wherein the first information indicates the index of the first data in the first dataset.

11. The method according to claim 10, wherein the first information is one of a plurality of pieces of information transmitted based on a first periodicity, and the method further comprises:
receiving or sending configuration information, wherein the configuration information is used to configure the first periodicity.

12. The method according to any one of claims 8 to 11, wherein the method further comprises:
sending indication information indicating the first dataset; and/or
receiving indication information indicating the second dataset.

13. The method according to any one of claims 8 to 12, wherein the method further comprises:
sending one or both of gradient information and a result of a loss function that are determined based on the third data and the fourth data.

14. The method according to any one of claims 8 to 13, wherein the method further comprises:
receiving or sending indication information indicating that the index satisfies the at least one item.

15. A communication method, comprising:
processing first data to obtain second data; and
sending the second data and fourth data, wherein the second data is used to determine third data, the fourth data is label data corresponding to the first data, and the second data is obtained by processing the first data based on a first neural network, and/or the third data is obtained by processing the second data based on a second neural network.

16. The method according to claim 15, wherein the method further comprises:
receiving one or both of gradient information and a result of a loss function that are determined based on the third data and the fourth data.

17. A communication method, comprising:
receiving second data and fourth data, wherein the second data is obtained based on first data, and the fourth data is label data corresponding to the first data; and
determining third data based on the second data, wherein the second data is obtained by processing the first data based on a first neural network, and/or the third data is obtained by processing the second data based on a second neural network.

18. The method according to claim 17, wherein the method further comprises:
sending one or both of gradient information and a result of a loss function that are determined based on the third data and the fourth data.

19. A communication method, comprising:
processing first data to obtain second data, wherein the first data is data in a first dataset; and
sending the second data and a first index, wherein the second data is used to determine third data, the first index is used to determine fourth data in a second dataset, the second dataset comprises label data corresponding to data in the first dataset, and the fourth data is label data corresponding to the first data, wherein
the second data is obtained by processing the first data based on a first neural network, and/or the fourth data is obtained by processing the second data based on a neural network.

20. The method according to claim 19, wherein the method further comprises:
receiving one or both of gradient information and a result of a loss function that are determined based on the third data and the fourth data.

21. A communication method, comprising:
receiving second data and a first index, wherein the second data is obtained based on first data, the first data is data in a first dataset, the first index is used to determine fourth data in a second dataset, the second dataset comprises label data corresponding to data in the first dataset, and the fourth data is label data corresponding to the first data; and
determining third data based on the second data, wherein the second data is obtained by processing the first data based on a first neural network, and/or the third data is obtained by processing the second data based on a second neural network.

22. The method according to claim 21, wherein the method further comprises:
sending one or both of gradient information and a result of a loss function that are determined based on the third data and the fourth data.

23. A communication apparatus, comprising a module configured to perform the method according to any one of claims 1 to 22.

24. A communication apparatus, comprising at least one processor, wherein the at least one processor is coupled to a memory, and the at least one processor is configured to perform the method according to any one of claims 1 to 22.

25. The communication apparatus according to claim 24, wherein the communication apparatus is a chip or a chip system.

26. A readable storage medium, wherein the storage medium stores a computer program or instructions, and when the computer program or the instructions are executed by a communication apparatus, the method according to any one of claims 1 to 22 is implemented.

27. A computer program product, comprising instructions, wherein when the instructions are run on a computer, the computer is enabled to perform the method according to any one of claims 1 to 22.
